(19) Europäisches Patentamt
European Patent Office
Office européen des brevets

(11) Veröffentlichungsnummer: **0 003 587**
**B1**

(12) # EUROPÄISCHE PATENTSCHRIFT

(45) Veröffentlichungstag der Patentschrift: **14.07.82**

(51) Int. Cl.³: **C 05 C 11/00,** C 09 K 17/00

(21) Anmeldenummer: **79100333.8**

(22) Anmeldetag: **05.02.79**

(54) **Agrochemische Mittel auf Basis von stabilisierten Azulminsäuren.**

(30) Priorität: **14.02.78 DE 2806097**

(43) Veröffentlichungstag der Anmeldung: **22.08.79 Patentblatt 79/17**

(45) Bekanntmachung des Hinweises auf die Patenterteilung: **14.07.82 Patentblatt 82/28**

(84) Benannte Vertragsstaaten: **BE CH DE FR GB IT NL SE**

(56) Entgegenhaltungen:
**BE-A-363 102**
**DE-A-662 338**
**DE-A-950 911**
**DE-C-949 060**
**DE-C-949 237**
**GB-A-733 269**

(73) Patentinhaber: **BAYER AG, Zentralbereich Patente, Marken und Lizenzen, D-5090 Leverkusen 1, Bayerwerk (DE)**

(72) Erfinder: **Wagner, Kuno, Dr., Am Kiesberg 8, D-5090 Leverkusen 1 (DE)**
Erfinder: **Niggemann, Johannes, Dr., Christian-Heß-Strasse 73, D-5090 Leverkusen 1 (DE)**
Erfinder: **Findeisen, Kurt, Dr., In der Follmuehle 10, D-5068 Odenthal 2 (DE)**
Erfinder: **Scheinpflug, Hans, Dr., Am Thelenhof 15, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 003 587 B1

BUNDESDRUCKEREI BERLIN

## Agrochemische Mittel auf Basis von stabilisierten Azulminsäuren

Die vorliegende Erfindung betrifft agrochemische Mittel auf Basis von Azulminsäuren, die durch Kondensation mit Carbonylverbindungen stabilisiert sind, sowie die Herstellung dieser Mittel und die Verwendung der stabilisierten Azulminsäuren als Agrochemikalien.

### Stand der Technik

Polymere Blausäuren, sogenannte Azulminsäuren, sowie mehrere Verfahren zu deren Herstellung sind bereits beschrieben worden (vgl. Houben-Weyl, Band 8 (1952), Seite 261; DE-B 662 338 und DE-B 949 060). Ein schwerwiegender Nachteil dieser bekannten Blausäure-Polymerisate besteht darin, daß sie sowohl bei der trockenen als auch bei der feuchten Lagerung schon bei Raumtemperatur fortlaufend kleine Mengen an Cyanwasserstoff abspalten. Daher ist eine praktische Verwendung dieser Stoffe außerordentlich umweltgefährdend und somit kaum möglich.

Weiterhin ist bereits bekannt, daß sich Blausäure-Polymerisate als Stickstoffdünger verwenden lassen (vgl. H. Banthien »Synthetische Stickstoffdüngemittel« in »Handbuch der Pflanzenernährung und Düngung« II/2, 1968, Springer-Verlag, Wien/New York, DE-B 911 018 sowie Angew. Chem. 72, (1960) Seiten 379—384). Nachteilig ist jedoch, daß diese Produkte, insbesondere unter hydrolytischen Bedingungen, Blausäure abspalten. Sie kommen deshalb für einen praktischen Einsatz als Düngemittel kaum in Frage.

Nach einem Vorschlag von Th. Völker kommt der braun-schwarzen, in Wasser hergestellten polymeren Blausäure (Azulminsäure) im wesentlichen die folgende Formel zu (vgl. Angew. Chem. 72, (1960) Seiten 379—384):

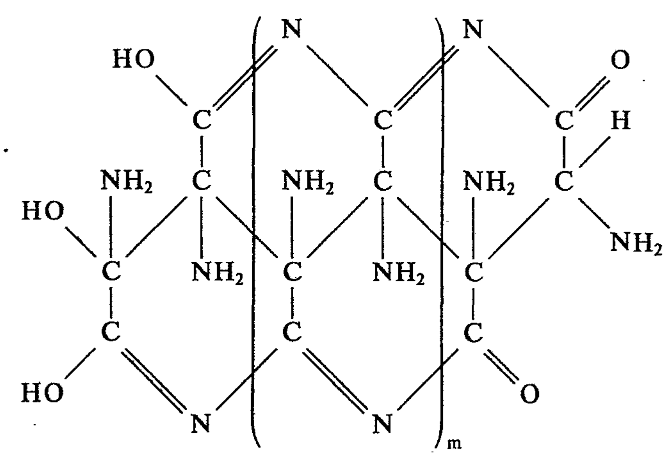

(I)

Aus den Sauerstoffgehalten der bekannten Azulminsäuren wurde ein Polymerisationsgrad (HCN) von X = 15—24 berechnet, so daß sich für m (Formel I) Werte von 1 bis 4 ergeben. Die maximal erzielten Molekulargewichte der Polymere liegen wenig oberhalb von 700.

### Erfindungsdarlegung

Es wurde nun gefunden, daß sich gegebenenfalls Zusatzstoffe enthaltende stabilisierte Azulminsäuren, die erhältlich sind durch Kondensation von Carbonylverbindungen mit Azulminsäuren mit einem Gehalt von 0,5 bis 55 Gew.-% an ionischen Gruppen der Formel

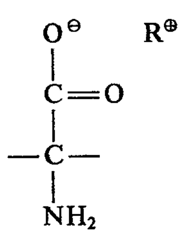

($F_1$)

in welcher

R für Wasserstoff, Ammonium, ein Äquivalent einer protonisierten oder quaternierten organischen Stickstoffbase, eines Sulfonium-Kations oder für ein Äquivalent eines Metallkations steht,

und mit einem Gehalt von 0,5 bis 15 Gew.-% an durch Decarboxylierungsreaktionen entstandenen Gruppen der Formel

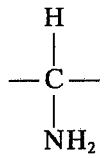

($F_2$)

bzw. Säureadditions-Salze und Komplex-Verbindungen dieser stabilisierten Azulminsäuren als Agrochemikalien verwenden lassen.

## Erfindungshöhe und technischer Fortschritt

Es ist als äußerst überraschend zu bezeichnen, daß die erfindungsgemäß verwendbaren, gegebenenfalls Zusatzstoffe enthaltenden, mit Carbonylverbindungen kondensierten Azulminsäuren sowie deren Säureadditions-Salze und Komplex-Verbindungen im Gegensatz zu den bisher bekannten Azulminsäuren gegenüber einer Abspaltung von Cyanwasserstoff extrem beständig sind. So spalten die erfindungsgemäß verwendbaren Produkte bei Temperaturen bis zu 130°C — in manchen Fällen bei Temperaturen bis zu 180°C und in Extremfällen sogar bei Temperaturen bis zu 200°C — so gut wie keinen Cyanwasserstoff ab. Die analytisch feststellbaren Mengen an abgespaltenem Cyanwasserstoff sind gleich Null oder liegen auch unter ungünstigen Bedingungen unter den gesetzlich festgelegten MAK-Werten. Ferner sind die erfindungsgemäß verwendbaren Produkte auch gegenüber einer hydrolytischen Abspaltung von Cyanwasserstoff sehr stabil. So lassen sich selbst nach dreistündiger Behandlung von erfindungsgemäß verwendbaren stabilisierten Azulminsäuren in wäßrigem Medium bei 100°C keine Cyanidionen oder weniger als $0{,}2 \cdot 10^{-6}$ g Cyanidionen pro Gramm Wasser nachweisen. Überraschend ist ferner, daß sich die erfindungsgemäß verwendbaren Produkte als Agrochemikalien einsetzen lassen. Aufgrund des bekannten Standes der Technik mußte angenommen werden, daß die erfindungsgemäß verwendbaren Produkte ähnlich wie die vorbekannten Blausäurepolymerisate bei der Lagerung und vor allem unter hydrolytischen Bedingungen Cyanwasserstoff abspalten. Im Gegensatz zu den Erwartungen ist dies jedoch nicht der Fall.

Die erfindungsgemäß verwendbaren Produkte besitzen eine Reihe von Vorteilen. So weisen sie eine wesentlich höhere Quellbarkeit auf als die vorbekannten nahezu fehlerstellenfreien Azulminsäuren und sind deshalb im Gegensatz zu den vorbekannten Azulminsäuren vielseitig verwendbar. Zum Beispiel sind sie nicht nur gegenüber Cyanwasserstoffabspaltung stabil, sondern lassen sich unter hydrolytischen Bedingungen, wie sie im Boden vorkommen, unter Mitwirkung von Bodenbakterien ohne Freisetzung von Blausäure abbauen. Sie lassen sich deshalb als Stickstoffdünger mit Langzeitwirkung verwenden.

Weiterhin eignen sich erfindungsgemäß verwendbare Produkte, die mit entsprechenden Ionen bzw. Salzen beladen sind, zur Versorgung von Pflanzen mit Makro- und Mikronährstoffen. Diejenigen erfindungsgemäß verwendbaren Stoffe, die mit Säuren, wie z. B. Salpetersäure oder Phosphorsäure, oder mit Ammonium-Salzen beladen sind, stellen besonders wertvolle Düngemittel dar, da sie sowohl organisch gebundenen Stickstoff als auch anorganische Nährstoffe für Pflanzen zur Verfügung stellen. Außerdem zeichnen sich die erfindungsgemäß verwendbaren Stoffe durch ein hohes Bindungsvermögen für im Boden vorkommende Schadstoffe, wie z. B. unerwünschte Schwermetallionen aus. Sie lassen sich darüber hinaus als Bodenverbesserungsmittel sowie für andere Zwecke in der Landwirtschaft und im Gartenbau einsetzen.

## Genaue Definition der erfindungsgemäß verwendbaren Produkte

Als Carbonylverbindungen, die in den erfindungsgemäß verwendbaren Produkten in kondensierter Form enthalten sind, kommen vorzugsweise Aldehyde, Ketone und Ketoester mit reaktiven Carbonylgruppen in Betracht. Als Aldehyde seien speziell genannt: Formaldehyd, Acetaldehyd, Isobutyraldehyd, Chloral, Hydroxyethylaldehyd, Hydroxypivalinaldehyd, Acrolein, Crotonaldehyd, Glyoxal, Methylglyoxal, Furfurol, Hydroxymethylfurfurol, Glukose, Salicylaldehyd, Hydroxyacetaldehyd, Glycerinaldehyd und andere Aldehyde, die unter den Bedingungen der Formose-Synthese aus Formaldehyd entstehen. Besonders bevorzugt ist Formaldehyd. Als Ketone seien Dihydroxyaceton und Cyclohexanon speziell genannt; als Ketoester sei Acetessigester beispielshaft erwähnt.

Die in den erfindungsgemäß verwendbaren stabilisierten Azulminsäuren enthaltenen Fehlerstellen sind durch die Formeln ($F_1$) und ($F_2$) definiert. In der Formel ($F_1$) steht R vorzugsweise für Wasserstoff, Ammonium oder ein Äquivalent eines Kations von einem Metall aus der I. bis V. Hauptgruppe bzw. aus der I. bis VIII. Nebengruppe, wobei die Kationen von Lithium, Natrium, Kalium, Beryllium, Magnesium, Calcium, Strontium, Barium, Aluminium, Thallium, Zinn, Wismut, Kupfer, Silber, Gold, Zink, Cadmium, Titan, Zirkon, Chrom, Mangan, Eisen, Cobalt, Nickel, Platin und Palladium beispielhaft genannt seien. R steht ferner vorzugsweise für ein Äquivalent eines protonisierten Alkylamins mit 1 bis 6 Kohlenstoffatomen, eines protonisierten Dialkylamins mit 1 bis 6 Kohlenstoffatomen pro Alkylgruppe, eines protonisierten Trialkylamins mit 1 bis 6 Kohlenstoffatomen pro Alkylgruppe, eines protonisierten Hydroxyalkylamins mit 1 bis 6 Kohlenstoffatomen, eines protonisierten Di-(hydroxy-alkyl)-amins mit 1 bis 6 Kohlenstoffatomen pro Hydroxyalkylgruppe, eines protonisierten Tri-(hydroxyalkyl)-amins mit 1 bis 6 Kohlenstoffatomen pro Hydroxyalkylgruppe, eines protonisierten Cycloalkylamins mit 3 bis 8 Kohlenstoffatomen, eines protonisierten Alkylendiamins mit 2 bis 6 Kohlenstoffatomen, eines protonisierten Guanidins, Melamins oder Dicyandiamids oder einer protonisierten, gesättigten oder ungesättigten heterocyclischen Stickstoffbase mit 5 bis 7 Ringgliedern und 1 bis 3 Stickstoffatomen im heterocyclischen Ring, sowie für diejenigen Kationen, die durch Quaternisierung, wie z. B. Permethylierung, der vorgenannten basischen Stickstoff-Verbindungen entstehen. Besonders bevorzugte Stickstoffbasen sind in diesem Zusammenhang Methylamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,3-Triazol, 2-Äthylimidazol und Aminotriazol. Weiterhin steht R vorzugsweise für Trialkylsulfonium-Kationen, insbesondere für das Triäthylsulfonium-Kation.

Unter erfindungsgemäß verwendbaren, durch Kondensation mit Carbonylverbindungen stabilisierten Azulminsäure-Säure-Additions-Salzen sind solche Salze zu verstehen, die sich durch Addition eines Protons einer anorganischen oder organischen Säure an eine Aminogruppe oder eine andere geeignete Gruppe in einer stabilisierten Azulminsäure bilden. Als anorganische Säuren kommen hierbei vorzugsweise in Frage Halogenwasserstoffsäuren, wie Fluorwasserstoffsäure, Chlorwasserstoffsäure und Bromwasserstoffsäure, weiterhin Säuren des Phosphors, wie Phosphorsäure, phosphorige Säure, Dialkylphosphorsäure, z. B. Dibutylphosphorsäure, Polyphosphorsäure mit Molekulargewichten von 6000 bis 40 000 und Phospholinoxid-phosphonsäuren, z. B. solchen der Formeln

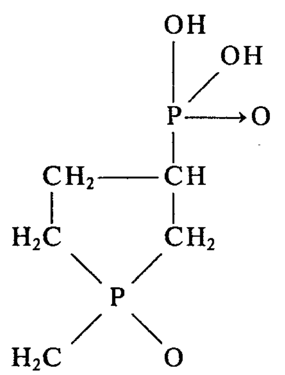

und

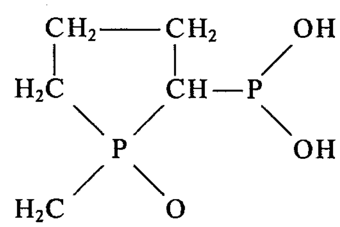

ferner Salpetersäure und vom Schwefel abgeleitete Säuren, wie Schwefelsäure und Sulfonsäuren, wobei Äthylsulfonsäure, p-Toluolsulfonsäure und Naphthalin-1,5-disulfonsäure beispielhaft genannt seien. Als organische Säuren kommen vorzugsweise in Betracht gesättigte oder ungesättigte Carbonsäuren, wie Essigsäure, Propionsäure, 2-Äthylcapronsäure, Acrylsäure, Methacrylsäure, Ölsäure und Ricinolsäure, weiterhin Halogencarbonsäuren, wie Chloressigsäure, Dichloressigsäure und Trichloressigsäure, ferner Dicarbonsäuren, wie Maleinsäure, Fumarsäure und Bernsteinsäure und davon abgeleitete Halbester, und außerdem Hydroxycarbonsäuren, wie Hydroxyessigsäure, Weinsäure, Zitronensäure und Salicylsäure.

Unter erfindungsgemäß verwendbaren durch Kondensation mit Carbonylverbindungen stabilisierten Azulminsäure-Komplex-Verbindungen sind vorzugsweise Komplexe aus stabilisierten Azulminsäuren und Metallverbindungen oder Ammoniumsalzen zu verstehen. Als Metallverbindungen kommen hierbei insbesondere Salze, Säuren, Hydroxide bzw. Oxide von Metallen der II. bis V. Hauptgruppe bzw. der I. bis VIII. Nebengruppe in Betracht. Beispielhaft genannt seien Calcium-chlorid, -acetat, -nitrat und -hydroxid, bzw. -oxid, Strontiumnitrat, Bariumchlorid und -acetat, Borate, Aluminium-acetat und -formiat, Thalliumsulfat, Thalliumnitrat, Silizium-tetrachlorid, Natrium bzw. Kaliumsilikat, Zinn-II-chlorid, Wismut-III-hydroxid und Wismut-III-nitrat, Kupfer-sulfat, -nitrat und -acetat, Silbernitrat, Tetrachlorogoldsäure, Zink-chlorid und -acetat, Cadmiumchlorid, Titantetrachlorid und -tetrabutylat, Zirkonsulfat, Vanadate, Chrom-III-chlorid, Molybdate, Wolframate und deren Heteropolysäuren, Mangan-II-sulfat und -II-acetat, Eisen-II-sulfat, -II-acetat und -III-chlorid, Cobaltchlorid, Nickelchlorid, Hexachloroplatinsäure und Palladium-II-chlorid. — Als Ammoniumsalze

kommen insbesondere Ammoniumnitrat und Ammoniumacetat in Frage.

Als Zusatzstoffe können in den erfindungsgemäß verwendbaren Wirkstoffen organische Naturstoffe und daraus gewonnene Produkte, anorganische Naturstoffe und daraus gewonnene Produkte, synthetische organische Produkte, synthetische anorganische Produkte und/oder Mischprodukte aus organischen und anorganischen Produkten enthalten sein.

Vorzugsweise in Frage kommende organische Naturstoffe und daraus gewonnene Produkte sind hierbei Holzpulver, Ligninpulver, Ligninsulfonsäuren, ammonifizierte Ligninsulfonsäuren, Humus, Huminsäuren, ammonifizierte Huminsäuren, Torf, Proteine und deren Abbauprodukte, z. B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Als anorganische Naturstoffe und daraus gewonnene Produkte kommen vorzugsweise in Betracht Silikate, wie Aluminiumsilikate, Calciumsilikate, Magnesiumsilikate und Alkalisilikate, ferner Seesand und andere natürlich vorkommende Siliziumdioxide, Kieselsäuren, insbesondere disperse Kieselsäuren, Kieselgele, weiterhin Tonmineralien, Glimmer, Carbonate wie Calciumcarbonat, Phosphorit und Phosphate wie Calciumphosphat und Ammoniummagnesiumphosphat, Sulfate wie Calciumsulfat und Bariumsulfat, außerdem Oxide wie Zirkondioxid, Nickeloxid, Palladiumoxid, Bariumoxid, disperse Antimonoxide und Aluminiumoxide, wie Bauxit, darüber hinaus Flugaschen und Ruß-Sorten verschiedenster Art.

Als synthetische organische Produkte kommen vorzugsweise in Frage Aminoplastkondensate, insbesondere solche aus Harnstoff, Dicyandiamid, Melamin oder Oxamid und Aldehyden, wie Formaldehyd, Acetaldehyd, Isobutyraldehyd, Hydroxypivalinaldehyd, Crotonaldehyd, Hydroxyaceraldehyd, Furfurol, Hydroxymethylfurfurol, Glyoxal und Glucose, wobei speziell genannt seien Kondensationsprodukte aus Harnstoff und Formaldehyd, Harnstoff und Glyoxal, Harnstoff und Acetaldehyd, Harnstoff und Isobutyraldehyd, Harnstoff und Crotonaldehyd, Harnstoff und Hydroxypivalinaldehyd sowie das 2-Oxo-4-methyl-6-ureido-hexahydropyrimidin, welches ein bekanntes Kondensationsprodukt aus 1 Mol Crotonaldehyd und 2 Mol Harnstoff ist, das aus intermediär anfallendem Crotonyliden-diharnstoff unter Absättigung der Doppelbindung entsteht und dem die Konstitution

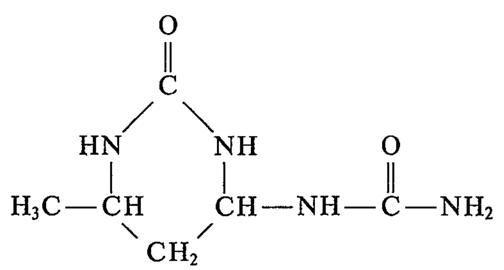

zukommt. Weiterhin kommen als synthetische organische Produkte vorzugsweise in Betracht Kunststoffe, wie Polyamidpulver, Polyurethanpulver und Polycarbodiimide, ferner polymere Chinone, Additions- bzw. Kondensationsprodukte aus Chinonen, insbesondere Benzochinon, mit Aminen oder Ammoniak, außerdem mit Aldehyden, insbesondere Formaldehyd, vernetzte Gelatine, synthetische Bodenverbesserungsmittel, wie z. B. das als Hygromull bekannte Produkt (=Harnstoff-Formaldehyd-Harzflocken), darüber hinaus synthetische Zucker, wie z. B. aus Formaldehyd hergestellte Formose-Zuckergemische, ferner schwerlösliche Rohrzucker-Komplexe, wie der Saccharose-Calciumoxid-Komplex der Zusammensetzung 1 Mol Saccharose · 3 Mol Calciumoxid, und schließlich organische Ammoniumsalze, wie Ammoniumcarbaminat, und andere organische Stickstoffverbindungen wie Hexamethylentetramin und Hexahydrotriazine.

Als synthetische anorganische Produkte, die vorzugsweise in Frage kommen, seien genannt Düngemittel, wie Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat, ferner Pigmente, wie Eisenoxide und Titandioxide, außerdem Metalloxide und Metallhydroxide, wie Calciumoxid, Calciumhydroxid, Wismuthydroxid, Manganhydroxid und Magnesiumhydroxid, wobei in situ hergestellte Hydroxide besonders bevorzugt sind, weiterhin synthetische Kieselsäuren, insbesondere in situ hergestellte Kieselsäure und deren Salze, außerdem Wasserglas, Salze wie Cobaltmolybdat, Ammoniumcarbonat und Calciumcarbonat.

Als Mischprodukte aus anorganischen und organischen Produkten kommen vorzugsweise neutrale, basische oder saure Böden, natürliche Bodenverbesserungsmittel, biologisch aktive Gartenerde und

Klärschlämme in Betracht.

Die Zusatzstoffe können in den erfindungsgemäß verwendbaren Produkten in physikalischer und/oder chemischer Bindung in einer Menge von 1 bis 95 Gewichtsprozent, vorzugsweise von 5 bis 90 Gewichtsprozent enthalten sein. In manchen Fällen können Produkte vorliegen, in denen die stabilisierten Azulminsäuren von den Zusatzstoffen umhüllt sind. Als Beispiel für derartige Produkte seien mit Polycarbodiimiden umhüllte, z. B. mikroverkapselte stabilisierte Azulminsäuren genannt.

Herstellung der erfindungsgemäß verwendbaren Produkte

Die erfindungsgemäß verwendbaren, gegebenenfalls Zusatzstoffe enthaltenden, durch Kondensation mit Carbonylverbindungen stabilisierten Azulminsäuren sowie deren Säureadditions-Salze und Komplex-Verbindungen sind noch nicht bekannt. Sie lassen sich jedoch in einfacher Weise nach mehreren Verfahren herstellen. So erhält man die betreffenden Produkte dadurch, daß man

1) gegebenenfalls Zusatzstoffe enthaltende modifizierte Azulminsäuren mit einem Gehalt von 0,5 bis 55 Gewichtsprozent an ionischen Gruppen der Formel

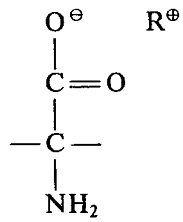

($F_1$)

in welcher

R die oben angegebene Bedeutung hat,

und mit einem Gehalt von 0,5 bis 15 Gewichtsprozent an Gruppen der Formel

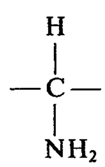

($F_2$)

in wäßrigem Medium gegebenenfalls in Anwesenheit von Zusatzstoffen bei Temperaturen zwischen 50 und 150° C mit Carbonylverbindungen kondensiert,

oder daß man

2) gegebenenfalls Zusatzstoffe enthaltende Säureadditionssalze bzw. Komplex-Verbindungen von modifizierten Azulminsäuren mit einem Gehalt von 0,5 bis 55 Gewichtsprozent an ionischen Gruppen der Formel

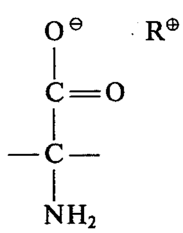

($F_1$)

in welcher

R die oben angegebene Bedeutung hat,

und mit einem Gehalt von 0,5 bis 15 Gewichtsprozent an Gruppen der Formel

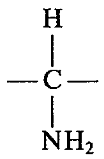

(F$_2$)

in wäßrigem Medium gegebenenfalls in Anwesenheit von Zusatzstoffen bei Temperaturen zwischen 50 und 150° C mit Carbonylverbindungen kondensiert,

oder daß man

3) nahezu fehlerstellenfreie Azulminsäuren gegebenenfalls in Gegenwart von Zusatzstoffen bei Temperaturen zwischen 50 und 150°C mit Carbonylverbindungen in wäßrigem Medium kondensiert,

oder daß man

4) Blausäure mit Hilfe basischer Katalysatoren unter hydrolysierenden Bedingungen in wäßrigem Medium gegebenenfalls in Gegenwart von Zusatzstoffen polymerisiert und anschließend ohne vorherige Isolierung der Reaktionsprodukte gegebenenfalls in Gegenwart von Zusatzstoffen bei Temperaturen zwischen 50 und 150°C mit Carbonylverbindungen in wäßrigem Medium kondensiert,

oder daß man

5) modifizierte Azulminsäuren mit einem Gehalt von 0,5 bis 55 Gewichtsprozent an ionischen Gruppen der Formel

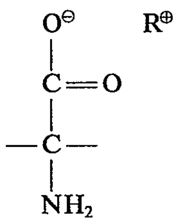

(F$_1$)

in welcher

R die oben angegebene Bedeutung hat,

und mit einem Gehalt von 0,5 bis 15 Gewichtsprozent an Gruppen der Formel

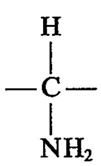

(F$_2$)

in wäßrigem Medium mit Basen umsetzt, gegebenenfalls das Kation durch Behandlung mit Metallsalzen austauscht und anschließend in wäßrigem Medium gegebenenfalls in Gegenwart von Zusatzstoffen in wäßrigem Medium bei Temperaturen zwischen 50 und 150°C mit Carbonylverbindungen kondensiert,

oder daß man

6) modifizierte Azulminsäuren in wäßrigem Medium bei Temperaturen zwischen 20 und 120°C mit organischen oder anorganischen Säuren behandelt und anschließend gegebenenfalls in Gegenwart von Zusatzstoffen in wäßrigem Medium bei Temperaturen zwischen 50 und 150°C mit Carbonylverbindungen kondensiert,

oder daß man

7) nahezu fehlerstellenfreie Azulminsäuren in Anwesenheit von hydrolytisch abbaubaren Naturstoffen sowie in Gegenwart von Säure in wäßrigem Medium bei Temperaturen zwischen 50 und 150° C mit Carbonylverbindungen kondensiert,

und die nach den genannten Verfahren hergestellten Produkte gegebenenfalls anschließend mit Säure oder Base behandelt.

Erläuterungen

Unter modifizierten Azulminsäuren, die bei einigen der oben angegebenen Verfahren als Ausgangsstoffe dienen, sind im vorliegenden Fall solche Blausäurepolymerisate zu verstehen, die ionische Gruppen der Formeln

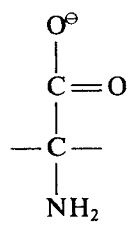

und

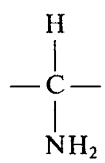

enthalten. Derartige Gruppen haben ihren Ursprung in Nitrilgruppen, die in der Azulminsäure vorhanden sind und als Haltepunkte der cyclisierenden Nitrilpolymerisation aufgefaßt werden können.

In idealisierter Darstellung kann der Übergang von einer Nitrilgruppe der Azulminsäure in eine entsprechende Carboxylgruppe formelmäßig wie folgt veranschaulicht werden:

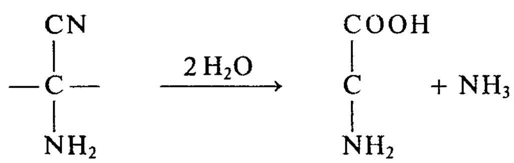


bzw.

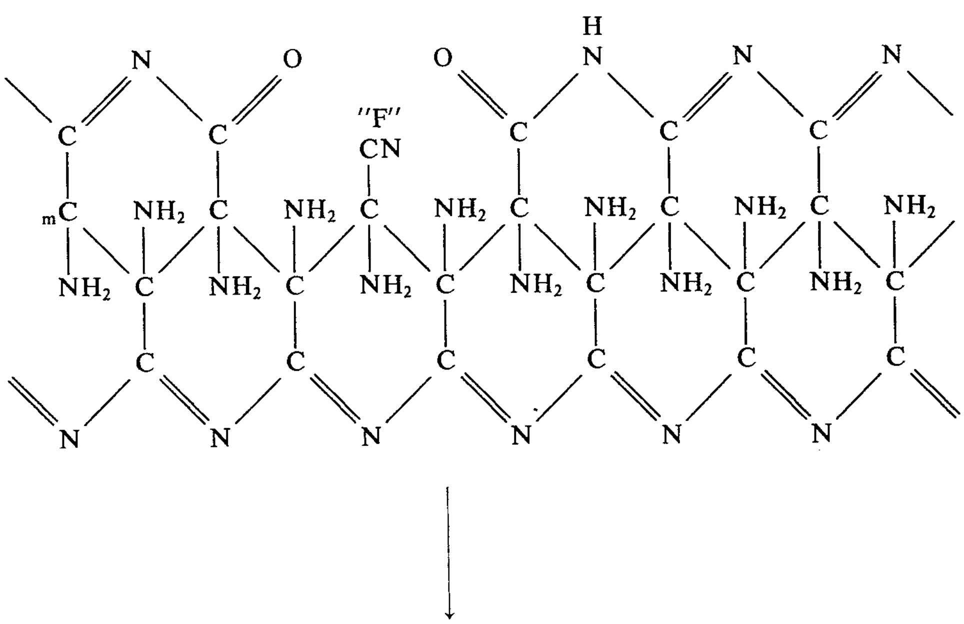

(II)

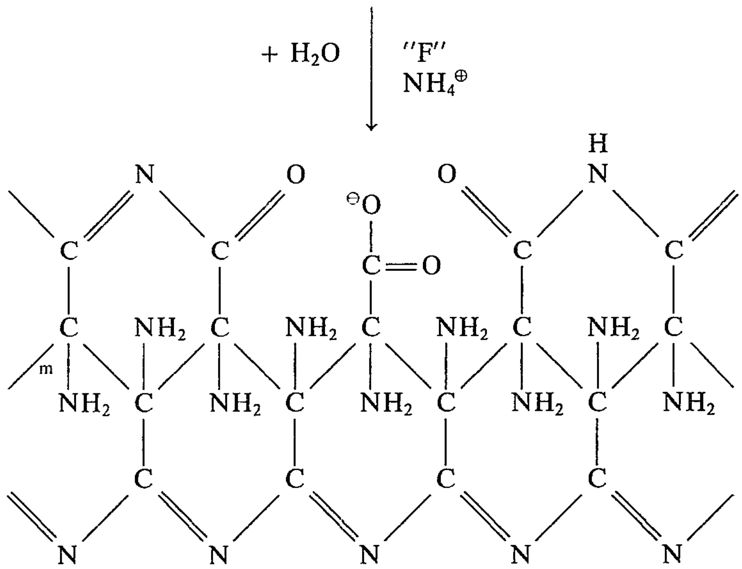


Selbstverständlich ist auch die Bildung von Amid-, Imid-, Amidin- oder Lactamgruppen aus Nitrilgruppen möglich. Ferner sind auch andere Hydrolyse-Reaktionen für die Bildung von Fehlerstellen verantwortlich, z. B. kann eine eine

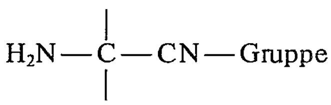


durch Cyanwasserstoff-Abspaltung und anschließende topochemische Hydrolysereaktion in eine Carbonylgruppe überführt werden.

Im folgenden werden die ionischen Gruppen der Formel

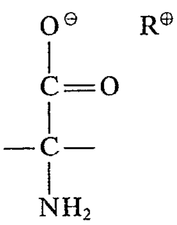

als $F_1$-Fehlerstellen und die Gruppen der Formel

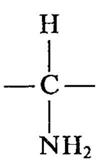

als $F_2$-Fehlerstellen bezeichnet.

Die $F_2$-Fehlerstellen entstehen aus den $F_1$-Fehlerstellen, in denen R für Wasserstoff oder ein anderes geeignetes Ion steht, gemäß nachstehendem Formelschema:

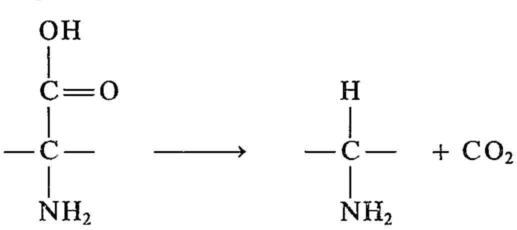

bzw. im Molekularverband der Azulminsäure:

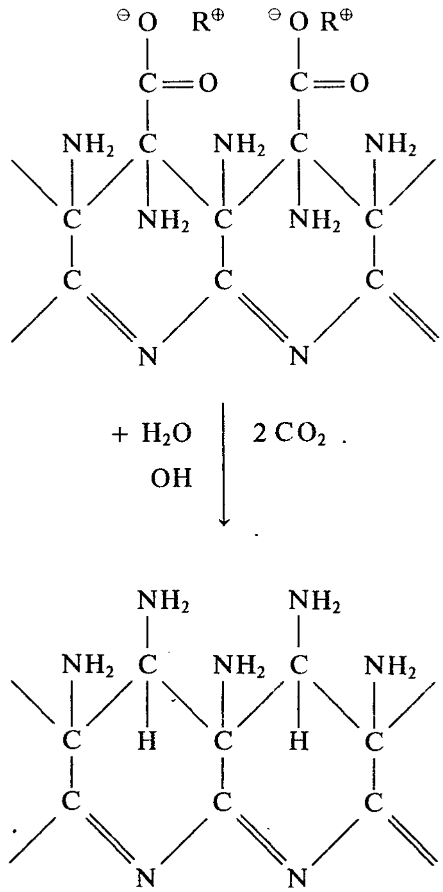


Da die Entstehung der $F_1$-Fehlerstellen mit der Freisetzung von Ammoniak und die Entstehung der $F_2$-Fehlerstellen mit der Freisetzung von Kohlendioxid gekoppelt ist, stellt die entbundene Menge an Ammoniak und Kohlendioxid ein quantitatives Maß für die Menge der erzeugten Fehlerstellen dar. Der Quotient aus der entbundenen Molmenge an Ammoniak und der entbundenen Molmenge an Kohlendioxid gibt Aufschluß über das Verhältnis von $F_1$- zu $F_2$-Fehlerstellen.

### Bestimmung des Fehlerstellengehaltes

Der Fehlerstellengehalt der modifizierten Azulminsäuren in Gewichtsprozent wird im folgenden jeweils in der Weise bestimmt, daß man das Äquivalentgewicht der betreffenden Fehlerstelle (=ionische oder nicht-ionische Gruppierung $F_1$ oder $F_2$) in Relation setzt zu der entsprechenden nicht in eine ionische oder nicht-ionische Gruppierung überführten Gewichtsgröße (100 g). So errechnet sich beispielsweise die Fehlerstellenkonzentration für eine $F_1$-Fehlerstelle, in der R für Wasserstoff steht, aus der jeweils entstandenen molaren Menge an Ammoniak und der Tatsache, daß die zugehörige ionische Gruppierung der Formel

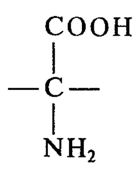

ein Äquivalentgewicht von 73 aufweist.

In analoger Weise errechnet sich der $F_2$-Fehlerstellengehalt aus der jeweils entbundenen molaren Menge an Kohlendioxid und der Tatsache, daß die betreffende Gruppierung der Formel

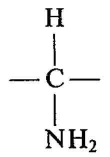

ein Äquivalentgewicht von 29 aufweist.

### Allgemeine Angaben zur Herstellung stabilisierter Azulminsäuren

Gemeinsames Merkmal der Verfahren (1) bis (7) zur Herstellung der erfindungsgemäß verwendbaren Wirkstoffe ist die Kondensation von Amino-, Amid-, Amidin- und Lactam-Gruppen, die in den eingesetzten Azulminsäuren vorhanden sind, mit Carbonylgruppen. — Verwendet man als Carbonylkomponente z. B. Formaldehyd, so läßt sich dessen Kondensation mit einer Aminogruppe einer Azulminsäure beispielsweise durch das folgende Formelschema veranschaulichen:

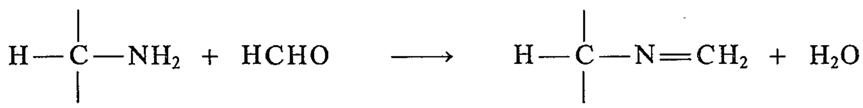

Außer der formelmäßig dargestellten Bildung von Azomethin-Gruppen können Reaktionen ablaufen, die zu Methylol-Verbindungen, N,N-Methylenverbindungen oder Verbindungen mit Methylenäther-Verknüpfungen ($>N-CH_2-O-CH_2N<$) führen. Azomethin-Gruppen ($-N=CH_2$) vernetzen leicht zu Hexahydrotriazin-Strukturen, wobei auch die partielle Bildung von Hexahydropyrimidin-Derivaten durch intramolekulare Kondensation cis-ständiger, in $\gamma$-Stellung befindlicher Amino-Gruppen möglich ist.

### Verfahren (1)

Die bei dem Verfahren (1) als Ausgangsstoffe zu verwendenden modifizierten Azulminsäuren (=fehlerstellenhaltige, nicht stabilisierte Azulminsäuren) können 1 bis 95° Gew.-%, vorzugsweise 5 bis 90 Gew.-% an Zusatzstoffen enthalten, wobei als Zusatzstoffe alle diejenigen Materialien in Betracht kommen, die bereits im Zusammenhang mit der Beschreibung der erfindungsgemäß verwendbaren Stoffe als Zusatzstoffe genannt wurden.

### Herstellung modifizierter Azulminsäuren

Die als Ausgangsstoffe benötigten, gegebenenfalls Zusatzstoffe enthaltenden modifizierten Azulminsäuren sind teilweise bekannt. Sie lassen sich nach verschiedenen Verfahren in einfacher Weise herstellen. So erhält man die betreffenden Produkte, die teilweise Gegenstand eines gesonderten Schutzbegehrens sind, dadurch, daß man

A) nahezu fehlerstellenfreie bekannte Azulminsäure in wäßrigem Medium,

- a) gegebenenfalls in Anwesenheit von Zusatzstoffen bei Temperaturen zwischen 0°C und 200°C, vorzugsweise zwischen 20 und 120°C, mit organischen oder anorganischen Säuren behandelt, oder
- b) gegebenenfalls in Anwesenheit von Zusatzstoffen bei Temperaturen zwischen 0°C und 200°C, vorzugsweise zwischen 20°C und 150°C mit Basen oder basischen Salzen behandelt, oder
- c) mit Wasser im Neutralbereich, vorzugsweise bei pH-Werten zwischen 6 und 6,5, bei Temperaturen zwischen 60°C und 150°C, vorzugsweise zwischen 80°C und 120°C, behandelt, oder
- d) bei Temperaturen zwischen 50°C und 150°C, vorzugsweise zwischen 80°C und 120°C, mit pflanzlichen Aschen, katalytisch wirksamen Naturstoffen und/oder Düngemitteln behandelt, oder
- e) gegebenenfalls in Anwesenheit von Oxidationsmitteln sowie gegebenenfalls in Anwesenheit von organischen Säuren bei Temperaturen zwischen 0°C und 150°C, vorzugsweise zwischen 20°C und 120°C, mit Metallsalzen behandelt, oder

f) bei Temperaturen zwischen 0°C und 150°C, vorzugsweise zwischen 20°C und 120°C, mit Metallsalz-Komplexen stabilisierter Azulminsäuren behandelt, oder

g) bei Temperaturen zwischen 0°C und 150°C, vorzugsweise zwischen 20°C und 120°C, mit Oxidationsmitteln behandelt,

oder daß man

B) Blausäure mit Hilfe basischer Katalysatoren unter hydrolysierenden Bedingungen in wäßrigem Medium gegebenenfalls in Gegenwart von Zusatzstoffen polymerisiert, und die nach den genannten Verfahren hergestellten Produkte gegebenenfalls anschließend mit Säure oder Base behandelt.

Bei der Herstellung der gegebenenfalls Zusatzstoffe enthaltenden modifizierten Azulminsäuren nach dem Verfahren (A), Varianten (a) bis (g) dienen nahezu fehlerstellenfreie Blausäurepolymerisate, sogenannte Azulminsäuren als Ausgangsstoffe. Derartige nahezu fehlerstellenfreie Azulminsäuren sind bereits bekannt (vgl. Houben-Weyl, Band 8 (1952), Seite 261; DE-B 662 338 und DE-B 949 060).

Variante (a) des Verfahrens (A)

Bei der Verfahrensweise (a) kommen als anorganische oder organische Säuren vorzugsweise alle diejenigen in Frage, die bereits im Zusammenhang mit der Beschreibung der erfindungsgemäß verwendbaren stabilisierten Azulminsäure-Säureadditionsprodukte vorzugsweise aufgezählt wurden. Als Zusatzstoffe kommen ebenso wie bei der Variante (b) des Verfahrens (A) jeweils alle diejenigen Materialien in Betracht, die bei der Beschreibung der erfindungsgemäß verwendbaren Produkte als Zusatzstoffe genannt wurden.

Bei der Durchführung der Variante (a) des Verfahrens (A) arbeitet man ebenso wie bei den Verfahrensvarianten (b), (d), (e) und (f) vorzugsweise in Wasser. Es ist jedoch auch möglich, das Wasser partiell durch andere Verdünnungsmittel, wie Schwefelwasserstoff oder Alkohole zu ersetzen, wobei Methanol und Ethanol speziell genannt seien.

Die Umsetzung nach Variante (a) des Verfahrens (A) wird ebenso wie die Varianten (b) bis (g) im allgemeinen unter Normaldruck ausgeführt. Es ist jedoch auch möglich, jeweils unter erhöhtem Druck zu arbeiten.

Bei der Durchführung der Variante (a) des Verfahrens (A) setzt man auf 1 Mol (bezogen auf die Moleküleinheit

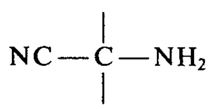

mit dem Äquivalentgewicht 54) nahezu fehlerstellenfreier Azulminsäure eine katalytische Menge oder 1 bis 4 Mol einer anorganischen oder organischen Säure sowie gegebenenfalls eine solche Menge an Zusatzstoffen ein, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden.

Variante (b) des Verfahrens (A)

Bei dieser Verfahrensvariante kommen als Basen sowohl organische als auch anorganische Basen in Frage. Vorzugsweise verwendbare organische Basen sind Ammoniak, Alkylamine mit 1 bis 6 Kohlenstoffatomen, Dialkylamine mit 1 bis 6 Kohlenstoffatomen pro Alkylgruppe, Trialkylamine mit 1 bis 6 Kohlenstoffatomen pro Alkylgruppe, Hydroxyalkylamine mit 1 bis 6 Kohlenstoffatomen, Di-(hydroxyalkyl)-amine mit 1 bis 6 Kohlenstoffatomen pro Hydroxyalkylgruppe, Tri-(hydroxyalkyl)-amine mit 1 bis 6 Kohlenstoffatomen pro Hydroxyalkylgruppe, Alkyl-hydroxyalkyl-amine mit 1 bis 6 Kohlenstoffatomen in der Alkyl- bzw. in der Hydroxyalkyl-gruppe. Cycloalkylamine mit 3 bis 8 Kohlenstoffatomen, Alkylendiamine mit 2 bis 6 Kohlenstoffatomen, Guanidin, Melamin, Dicyandiamid, gesättigte oder ungesättigte heterocyclische Stickstoffbasen mit 5 bis 7 Ringgliedern und 1 bis 3 Stickstoffatomen im heterocyclischen Ring, sowie diejenigen Basen, die sich von den durch Quaternisierung, z. B. Permethylierung, der vorgenannten Stickstoffverbindungen entstehenden Verbindungen ableiten, und weiterhin diejenigen Basen, die sich von Trialkylsulfonium-Verbindungen ableiten.

Besonders bevorzugte Stickstoffbasen sind in diesem Zusammenhang Ammoniak, Methylamin, Methyläthanolamin, Dimethylamin, Trimethylamin, Äthylamin, Diäthylamin, Triäthylamin, tert.-Butylamin, Äthanolamin, Diäthanolamin, Triäthanolamin, Cyclopropylamin, Cyclopentylamin, Cyclohexylamin, Äthylendiamin, Pyrrolidin, Piperidin, Morpholin, Imidazol, Pyrazol, 1,2,4-Triazol, 1,2,3-Triazol,

2-Äthyl-imidazol, Aminotriazol und Triäthylsulfoniumhydroxid.

Vorzugsweise verwendbare anorganische Basen sind Alkali- und Erdalkalimetall-hydroxide. Speziell genannt seien Lithiumhydroxid, Natriumhydroxid, Kaliumhydroxid, Magnesiumhydroxid, Calciumhydroxid, Strontiumhydroxid und Bariumhydroxid.

Als basische Salze kommen bei der Durchführung der Variante (b) des Verfahrens (A) vorzugsweise Alkalisulfide, wie Natriumsulfid, Natriumhydrogensulfid und Kaliumhydrogensulfid, ferner Natriumthiosulfat, Ammoniumthiosulfat, Ammoniumpolysulfide, Calciumhydrogensulfid, Calciumthiosulfat und Calciumcyanamid, weiterhin Kaliumcarbonat, Kaliumhydrogencarbonat, Kaliumcyanat und Wasserglas (Natrium- oder Kaliumwasserglas) in Betracht. — Besonders geeignet zur Fehlerstellenerzeugung nach dieser Methode sind auch Gemische von Ammoniak und Natriumthiosulfat, Ammoniumthiosulfat, Natriumhydrogensulfid, Natriumsulfid und/oder Ammoniumpolysulfiden.

Die Variante (b) des Verfahrens (A) wird im Prinzip in gleicher Weise durchgeführt wie die Variante (a). Die Aufarbeitung erfolgt nach üblichen Methoden. Im Endprodukt noch enthaltene Base kann durch Zugabe einer entsprechenden Menge an Säure, wie z. B. Phosphorsäure, neutralisiert werden, so daß die entstehenden Produkte dann auch die jeweiligen Salze enthalten.

Verwendet man starke Basen zur Fehlerstellenerzeugung, so lassen sich nach längeren Reaktionszeiten Azulminsäuren mit besonders hohen Fehlerstellengehalten herstellen. Die entstehenden Produkte besitzen Polyelektrolytcharakter.

### Variante (c) des Verfahrens (A)

Bei dieser Verfahrensvariante arbeitet man mit destilliertem Wasser. Die Reaktionszeiten liegen zwischen 4 und 60 Stunden.

Die Isolierung der Reaktionsprodukte erfolgt nach üblichen Methoden.

### Variante (d) des Verfahrens (A)

Als pflanzliche Aschen kommen hierbei die Verbrennungsprodukte von verschiedensten durch Photosynthese gebildeten Stoffen in Betracht. Vorzugsweise genannt seien die Aschen von Tannen, Ginster, serbischen Fichten, Eichen, Birken, Buchen, Weiden, Tabakblättern, Tabakstengeln, ferner von Getreide, wie Roggen oder Gerste, weiterhin von Pilzen, z. B. Steinpilzen, Äpfeln, Möhrenwurzeln, Kartoffelknollen und Weißkrautblättern. Besonders vorteilhaft ist die Verwendung von kaliumreichen Aschesorten. Unter Aschen sind hierbei auch Gemische von verschiedenen pflanzlichen Aschen zu verstehen.

Als katalytisch wirksame Naturstoffe kommen vorzugsweise biologisch aktive Gartenerde sowie basische oder saure Böden der verschiedensten Art in Frage.

Als Düngemittel können bei der Fehlerstellenerzeugung nach der Variante (d) des Verfahrens (A) alle handelsüblichen Düngemittel verwendet werden. Vorzugsweise genannt seien mit Pflanzennährstoffen beladene Torfsorten, Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat.

Die Variante (d) des Verfahrens (A) wird im Prinzip in gleicher Weise durchgeführt wie die Variante (a). Die Aufarbeitung erfolgt nach üblichen Methoden.

### Variante (e) des Verfahrens (A)

Als Metallverbindungen kommen hierbei vorzugsweise Salze von Metallen der II. bis V. Hauptgruppe bzw. der I. bis VIII. Nebengruppe in Betracht. Beispielhaft genannt seien Calciumchlorid, -acetat und -nitrat, Strontium-nitrat, Bariumchlorid und -acetat, Aluminiumacetat und -formiat, Thalliumsulfat und -nitrat, Siliziumtetrachlorid, Natrium- bzw. Kaliumsilikat, Zinn-II-chlorid, Wismut-III-nitrat, Kupfersulfat, -nitrat und -acetat, Silbernitrat, Tetrachlorogoldsäure, Zinkchlorid und -acetat, Cadmiumchlorid, Titan-tetrachlorid und -tetrabutylat, Zirkonsulfat, Chrom-III-chlorid, Mangan-II-sulfat und -acetat, Eisen-II-sulfat, -II-acetat und -III-chlorid, Cobaltchlorid, Nickelchlorid, Hexachloroplatinsäure und Palladium-II-chlorid. Weiterhin bevorzugt verwendbare Metallverbindungen sind die Säuren des Vanadins, Molybdäns und des Wolframs sowie deren Heteropolysäuren.

Als Oxidationsmittel kommen alle üblichen sauerstoffabgebenden Mittel in Frage. Vorzugsweise verwendbar sind Luft und Salpetersäure.

Als organische Säuren kommen vorzugsweise gesättigte und ungesättigte, gegebenenfalls substituierte Carbonsäuren in Betracht. Speziell genannt seinen Ameisensäure, Essigsäure, Propionsäure, 2-Ethylcapronsäure, Acrylsäure, Methacrylsäure, Ölsäure, Ricinolsäure, Chloressigsäure, Dichloressigsäure, Trichloressigsäure und Hydroxyessigsäure.

Durchführung und Aufarbeitung erfolgen bei der Variante (e) des Verfahrens (A) im Prinzip in gleicher Weise wie bei der Verfahrensvariante (a).

Variante (f) des Verfahrens (A)

Die Herstellung der als Ausgangsstoffe benötigten Metallsalz-Komplexe von mit Carbonylverbindungen stabilisierten Azulminsäuren wird im Zusammenhang mit der Herstellung der erfindungsgemäß verwendbaren Stoffe beschrieben.

Vorzugsweise verwendbare Metallsalz-Komplexe sind hierbei solche, die sich von denjenigen Metallverbindungen ableiten, die bereits im Zusammenhang mit der Variante (e) des Verfahrens (A) vorzugsweise genannt wurden.

Durchführung und Aufarbeitung erfolgen bei der Variante (f) des Verfahrens (A) im Prinzip in gleicher Weise wie bei der Verfahrensvariante (a). Pro Mol Azulminsäure verwendet man 0,5 bis 1 Mol an Metallsalzkomplex stabilisierter Azulminsäure.

Variante (g) des Verfahrens (A)

Hierbei kommen als Oxidationsmittel alle üblichen oxidierend wirkenden Reagenzien in Frage. Vorzugsweise verwendbar sind Luft, Sauerstoff, Kaliumpermanganat, Wasserstoffperoxid, Chromsäure und Chlorkalk.

Bei der Durchführung arbeitet man in wäßrigem Medium, vorzugsweise in Wasser. Es ist jedoch auch möglich, das Wasser partiell durch andere Verdünnungsmittel wie organische Carbonsäure zu ersetzen, wobei Ameisensäure und Essigsäure speziell genannt seien.

Durchführung und Aufarbeitung erfolgen bei der Variante (g) des Verfahrens (A) im Prinzip in gleicher Weise wie bei der Verfahrensvariante (a).

Verfahren (B)

Man geht hierbei von verdünnten, wäßrigen Blausäure-Lösungen aus. Im allgemeinen verwendet man Lösungen, deren Blausäure-Konzentration zwischen 10 und 30, vorzugsweise zwischen 15 und 25% liegt.

Als basische Katalysatoren kommen organische und anorganische Basen sowie basische Salze der verschiedensten Art in Betracht. Vorzugsweise verwendbar sind Alkalicyanide und Alkalicyanate, wie Natriumcyanid, Kaliumcyanid, Natriumcyanat und Kaliumcyanat, ferner Amine und Ammoniak. Vorteilhafterweise können auch Gemische verschiedenster Basen bzw. basischer Salze eingesetzt werden; beispielsweise genannt sei ein Gemisch aus Natriumcyanat und wäßriger Ammoniak-Lösung.

Als Zusatzstoffe können alle diejenigen Materialien verwendet werden, die bereits im Zusammenhang mit der Beschreibung der erfindungsgemäß verwendbaren Stoffe als Zusatzstoffe genannt wurden.

Bei der Durchführung des Verfahrens (B) arbeitet man in wäßrigem Medium, vorzugsweise in Wasser. Es ist jedoch auch möglich, das Wasser partiell durch andere Verdünnungsmittel, wie Schwefelwasserstoff oder Alkohole zu ersetzen, wobei Methanol und Äthanol speziell genannt seien.

Die Reaktionstemperaturen können im Falle des Verfahrens (B) innerhalb eines bestimmten Bereiches variiert werden, wobei die Temperaturführung jedoch der jeweiligen Reaktionsphase angepaßt sein muß. Im allgemeinen arbeitet man so, daß man zunächst 1 bis 4 Stunden bei Temperaturen zwischen 30° C und 70° C, vorzugsweise zwischen 40° C und 60° C polymerisiert, so daß ein etwa 60%iger Umsatz der monomeren Blausäure erreicht wird. Danach wird weitere 4 bis 10 Stunden bei Temperaturen zwischen 70° C und 95° C, vorzugsweise zwischen 80° C und 90° C polymerisiert, wodurch ein Umsatz von etwa 90 bis 95% erzielt wird. Anschließend kann man zur Vervollständigung der Umsetzung sowie zur Entfernung von noch vorhandener Blausäure und gegebenenfalls vorhandenen flüchtigen Aminen oder Ammoniak mehrere Stunden auf Temperaturen um etwa 100° C erhitzen.

Die Umsetzung nach dem Verfahren (B) wird im allgemeinen unter Normaldruck ausgeführt. Es ist jedoch auch möglich, unter erhöhtem Druck bei Temperaturen zwischen 120° C und 150° C zu arbeiten. Hierbei lassen sich in gezielter Weise relativ große Mengen an Fehlerstellen in den Verfahrensprodukten erzeugen.

Bei der Durchführung des Verfahrens (B) setzt man den basischen Katalysator in einer solchen Menge ein, daß sein Anteil 1 bis 15%, vorzugsweise 2 bis 10% der eingesetzten monomeren Blausäure beträgt. Die Aufarbeitung erfolgt nach üblichen Methoden.

Verfahren (1) Fortsetzung

Als Carbonylverbindungen kommen bei dem Verfahren (1) ebenso wie bei den Verfahren (2) bis (7) vorzugsweise alle diejenigen Aldehyde, Ketone und Ketoester in Frage, die bereits im Zusammenhang mit der Beschreibung der erfindungsgemäß verwendbaren Stoffe genannt wurden.

Weiterhin können auch insbesondere solche Verbindungen verwendet werden, die unter den Reaktionsbedingungen Aldehyde, wie z. B. Formaldehyd, freisetzen. Hierzu gehören vorzugsweise Chloralhydrat und Halbacetale des Formaldehyds, z. B. solche, die sich von Äthylenglykol, Diäthylenglykol, Glyzerin, Methanol, Äthanol und Propanol ableiten.

Ferner sind auch insbesondere solche Aldehyde oder Aldehyd-Derivate verwendbar, die unter den Bedingungen der Formose-Zuckergemisch-Synthese in situ aus Formaldehyd erzeugt werden. Im vorliegenden Fall verfährt man so, daß man modifizierte Azulminsäuren, die mit Calciumhydroxid, Bleihydroxid oder mit anderen geeigneten Katalysatoren beladen sind oder die katalytisch wirkenden Substanzen in komplexer Bindung enthalten, auf Formaldehyd einwirken läßt. Hierbei wird Formaldehyd in rascher Reaktion in $C_2$-, $C_3$-, $C_4$-, $C_5$- und $C_6$-Aldehyde, wie Hydroxyacetalaldehyd, Glyzerinaldehyd und höherfunktionelle hydroxylgruppenhaltige Aldehyde umgewandelt, welche in situ mit Aminogruppen der Azulminsäuren stabilisierende Kondensationsreaktionen eingehen.

Als Zusatzstoffe können bei dem Verfahren (1) wbenso wie bei den Verfahren (2) bis (6) alle diejenigen Materialien verwendet werden, die bereits im Zusammenhang mit der Beschreibung der erfindungsgemäß verwendbaren Stoffe als Zusatzstoffe genannt wurden.

Bei der Durchführung des Verfahrens (1) arbeitet man ebenso wie bei den Verfahren (2) bis (7) in wäßrigem Medium oder in wäßrig-alkoholischem Medium. Vorzugsweise kommt jeweils Wasser oder ein Gemisch aus Wasser und Alkohol, wie Methanol oder Ethanol, als Reaktionsmedium in Betracht.

Die Kondensation nach dem Verfahren (1) wird ebenso wie bei den Verfahren (2) und (3) unter sauren, basischen oder neutralen Bedingungen vorgenommen.

Die Umsetzung nach dem Verfahren (1) wird ebenso wie die Umsetzungen nach den Verfahren (2) bis (7) im allgemeinen unter Normaldruck ausgeführt. Es ist jedoch auch möglich, jeweils unter erhöhtem Druck zu arbeiten.

Bei der Durchführung des Verfahrens (1) setzt man auf 1 Mol (bezogen auf die Moleküleinheit

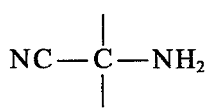

mit dem Äquivalentgewicht 54) gegebenenfalls Zusatzstoffe enthaltende modifizierte Azulminsäure 0,05 bis 6 Mol, vorzugsweise 0,2 bis 3 Mol an Carbonylverbindung, eine katalytische oder auch eine größere Menge an Säure oder Base (etwa 1 Mol Säure bzw. Base auf 100 Gewichtsteile Azulminsäure) sowie gegebenenfalls eine solche Menge an Zusatzstoffen ein, daß deren Anteil im Endprodukt zwischen 1 und 95 Gewichtsprozent liegt. Die Aufarbeitung erfolgt nach üblichen Methoden.

In diesem Zusammenhang sei darauf hingewiesen, daß bei dem Verfahren (1) ebenso wie bei den Verfahren (2) und (3) häufig bereits sehr geringe Mengen an Carbonylverbindungen (0,05 bis 0,2 Mol) ausreichen, um Stoffe zu erhalten, die eine hohe thermische und hydrolytische Stabilität gegen Cyanwasserstoff-Abspaltung besitzen.

Verwendet man bei der Kondensation Carbonylverbindungen wie Crotonaldehyd, Cyclohexanon oder Acetessigester, so ist der erreichbare Umsetzungsgrad bei diesen topochemischen Reaktionen infolge des ziemlich großen molekularen Querschnitts dieser Agentien langsamer als beim Einsatz von Verbindungen mit kleinerem molekularen Querschnitt. In diesen Fällen sind daher relativ lange Reaktionszeiten (mehr als 30 Stunden) und verhältnismäßig hohe Reaktionstemperaturen erforderlich, um eine ausreichende Stabilisierung zu erzielen.

Verfahren (2)

Bei dem Verfahren (2) als Ausgangsstoffe zu verwendende Säureadditionssalze bzw. Komplex-Verbindungen von modifizierten Azulminsäuren (=fehlerstellenhaltige Azulminsäuren) können 1 bis 95 Gewichtsprozent, vorzugsweise 5 bis 90 Gewichtsprozent an Zusatzstoffen enthalten.

Als Säuren, die in den als Ausgangsstoffen benötigten Säureadditions-Salzen modifizierten Azulminsäuren enthalten sein können, kommen vorzugsweise alle diejenigen Säuren in Frage, die bereits im Zusammenhang mit der Beschreibung der erfindungsgemäß verwendbaren Stoffe erwähnt wurden. Speziell genannt seien Salpetersäure, Phosphorsäure, phosphorige Säure, Chloressigsäure, Dichloressigsäure, Trichloressigsäure und Flußsäure.

Als Salze, die in den als Ausgangsstoffen benötigten Komplex-Verbindungen modifizierter Azulminsäuren in komplexer Bindung enthalten sein können, kommen vorzugsweise alle diejenigen Ammoniumsalze und Metallverbindungen in Frage, die bereits im Zusammenhang mit der Beschreibung der erfindungsgemäß verwendbaren Stoffe vorzugsweise erwähnt wurden. Speziell

genannt seien Eisen-II-acetat, Eisen-II-sulfat, Eisen-III-sulfat, Kupferacetat, Zinkacetat, Mangan-II-acetat, Cobaltchlorid, Zinkchlorid und Zinn-II-chlorid.

Die als Ausgangsstoffe verwendbaren Säureadditionssalze modifizierter Azulminsäuren sind bisher nur teilweise bekannt. Sie lassen sich herstellen, indem man die nach dem Verfahren (A) bzw. (B) zugänglichen, gegebenenfalls Zusatzstoffe enthaltenden modifizierten Azulminsäuren in wäßrigem Medium bei Raumtemperatur oder auch bei erhöhter Temperatur mit der jeweiligen Säure verrührt. Die Reaktionsprodukte werden durch Filtration isoliert.

Die weiterhin bei dem Verfahren (2) als Ausgangsstoffe verwendbaren Komplex-Verbindungen modifizierter Azulminsäuren sind teilweise bekannt. Sie lassen sich herstellen, indem man die nach den Verfahren (A) bzw. (B) zugänglich, gegebenenfalls Zusatzstoffe enthaltenden modifizierten Azulminsäuren in wäßrigem Medium bei Temperaturen zwischen 20° C und 120° C, vorzugsweise 50° C bis 110° C, verrührt. Die Reaktionsprodukte werden durch Filtration isoliert.

Die Durchführung und die Aufarbeitung erfolgen bei dem Verfahren (2) im Prinzip in gleicher Weise, wie es bei dem Verfahren (1) beschrieben wurde.

Verfahren (3)

Die als Ausgangsstoffe benötigten nahezu fehlerstellenfreien Azulminsäuren sind bekannt (vgl. Houben-Weyl, Band 8 [1952], Seite 261; DE-B 662 338 und DE-B 949 060).

Die Durchführung und die Aufarbeitung erfolgen bei dem Verfahren (3) in der bei dem Verfahren (1) angegebenen Weise.

Verfahren (4)

Man geht hierbei von verdünnten wäßrigen Blausäure-Lösungen aus, denen man gegebenenfalls Zusatzstoffe beimischt. Im allgemeinen verwendet man Lösungen, deren Blausäure-Konzentration zwischen 10 und 30%, vorzugsweise zwischen 15 und 25% liegt.

Als basische Katalysatoren kommen bei dem Verfahren (4) organische und anorganische Basen sowie basische Salze der verschiedensten Art in Betracht. Vorzugsweise verwendbar sind hierbei alle diejenigen Basen bzw. Salze, die bereits im Zusammenhang mit der Beschreibung des Verfahrens (B) vorzugsweise genannt wurden. Vorteilhafterweise können auch Gemische verschiedenster Basen bzw. basischer Salze eingesetzt werden; speziell genannt sei ein Gemisch aus Natriumcyanat und wäßriger Ammoniak-Lösung.

Die Reaktionstemperaturen können im Falle des Verfahrens (4) bei der Polymerisation innerhalb eines bestimmten Bereiches variiert werden, wobei die Temperaturführung der jeweiligen Reaktionsphase angepaßt sein muß. Im allgemeinen arbeitet man bei der Polymerisation so, wie es bei dem Verfahren (B) beschrieben wurde. Danach wird in einer zweiten Reaktionsphase die Kondensation mit Carbonylverbindungen in dem angegebenen Temperaturbereich vorgenommen.

Bei der Durchführung des Verfahrens (4) setzt man den basischen Katalysator in einer solchen Menge ein, daß sein Anteil 1 bis 15%, vorzugsweise 2 bis 10% der eingesetzten monomeren Blausäure beträgt. — Die Menge an Carbonylverbindungen wird so bemessen, saß pro Mol (bezogen auf die Moleküleinheit

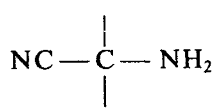

mit dem Äquivalentgewicht 54) an entstehender Azulminsäure 0,05 bis 6 Mol, vorzugsweise 0,2 bis 3 Mol an Carbonylverbindung vorhanden sind. Die Zusatzstoffe werden dem Reaktionsgemisch gegebenenfalls in einer solchen Menge zugesetzt, daß deren Anteil im Endprodukt zwischen 1 und 95 Gewichtsprozent, vorzugsweise zwischen 5 und 90 Gewichtsprozent liegt. Die Aufarbeitung erfolgt nach üblichen Methoden.

Verfahren (5)

Als modifizierte Azulminsäuren kommen bei dem Verfahren (5) alle diejenigen fehlerstellenhaltigen Azulminsäuren in Frage, die auch bei dem Verfahren (1) als Ausgangsstoffe eingesetzt werden können.

Als Basen oder basische Salze kommen bei der Durchführung des Verfahrens (5) die verschiedensten anorganischen oder organischen Basen sowie basische Salze in Betracht. Vorzugsweise verwendbar sind Alkalimetallhydroxide, wie Lithiumhydroxid, Natriumhydroxid und Kaliumhydroxid, Alkalimetallcarbonate, wie Natriumcarbonat, Kaliumcarbonat und Kaliumhydrogencarbonat, Alkalimetallsulfide, wie Natriumsulfid, Kaliumsulfid und Kaliumhydrogensulfid, Alkalimetallthiosulfate, wie Natriumthiosulfat, Alkylamine, ferner Ammoniumhydroxid und Ammoniumsalze, wie Ammoniumpolysulfide.

Als Metallsalze kommen bei der Durchführung des Verfahrens (5) vorzugsweise alle diejenigen Metallsalze in Frage, die bereits im Zusammenhang mit der Beschreibung der Variante (e) des Verfahrens (A) vorzugsweise erwähnt wurden. Speziell genannt seien Eisen-II-acetat, Eisen-II-sulfat, Eisen-III-sulfat, Kupferacetat, Zinkacetat, Mangan-II-sulfat, Cobaltchlorid, Zinkchlorid und Zinn-II-chlorid.

Die Durchführung und die Aufarbeitung erfolgen bei dem Verfahren (5) in der bei dem Verfahren (1) beschriebenen Weise. Die Aufarbeitung kann jedoch auch in der Weise erfolgen, daß man die erhaltene Dispersion zunächst einengt, dann mit Alkohol, wie Methanol, versetzt, danach erneut unter vermindertem Druck einengt und nach mehrmaligem Wiederholen dieses Vorganges das dabei anfallende Festprodukt abfiltriert, wäscht und gegebenenfalls trocknet.

### Verfahren (6)

Als modifizierte Azulminsäuren kommen hierbei alle diejenigen fehlerstellenhaltigen Azulminsäuren in Frage, die auch bei dem Verfahren (1) als Ausgangsstoffe eingesetzt werden können.

Als anorganische oder organische Säuren kommen vorzugsweise alle diejenigen Säuren in Frage, die bereits im Zusammenhang mit der Beschreibung der erfindungsgemäß verwendbaren Produkte vorzugsweise aufgezählt wurden.

Die Durchführung und die Aufarbeitung erfolgen bei dem Verfahren (6) analog zum Verfahren (1).

### Verfahren (7)

Als hydrolytisch abbaubare Naturstoffe kommen hierbei alle diejenigen Naturstoffe in Frage, die unter dem Einfluß von Säure ganz oder partiell abgebaut werden.

Hierzu gehören vorzugsweise Cellulose, Hemicellulosen, Zucker, Lignin, polymere Chinone, Holzpulver, pflanzliches Material, Polypeptide wie Gelatine und Wolle, ferner Hefeproteine, Algenmassen und Torfmassen.

Als Säuren kommen alle ausreichend starken organischen oder anorganischen Säuren in Betracht. Vorzugsweise verwendbar sind Phosphorsäure und phosphorige Säure.

Die Durchführung und die Aufarbeitung erfolgen bei dem Verfahren (7) nach der beim Verfahren (1) angegebenen Methode. Bei diesem Verfahren erfolgt die Fehlerstellenerzeugung unter gleichzeitigem hydrolytischen Abbau der jeweiligen eingesetzten Naturstoffe und unter gleichzeitiger Stabilisierung der Azulminsäuren durch Kondensation mit Carbonylverbindungen. Im Falle der Verwendung von 0,2 bis 80%iger Phosphorsäure bzw. phosphoriger Säure und Polypeptiden werden letztere in Aminosäuregemische gespalten.

Die Azulminsäure bindet infolge ihrer zahlreichen Aminogruppen etwa 0,3 bis 0,4 Mol an Säure, z. B. Phosphorsäure bzw. phosphoriger Säure, während die phosphorsauren Salze der Aminosäuren oder die der Oligopolypeptide bzw. die anderen niedermolekularen Spaltprodukte der eingesetzten Naturstoffe, auch wenn sie wasserlöslich sind, oft in großer Menge von der Azulminsäure-Matrix fixiert werden. Überschüssige Säure, z. B. Phosphorsäure, kann durch Zugabe von Calciumhydroxid als Calciumphosphat auf der Azulminsäure-Matrix gefällt werden. Sind hierbei hydrolysierte Zucker und Oligosaccharide vorhanden, so werden diese in Form ihrer meist schwer löslichen Calcium-Komplexe auf der Azulminsäure aufgezogen. Die nach diesem Verfahren erhaltenen Verfahrensprodukte können über längere Zeit gelagert werden, ohne daß eine unangenehme Geruchsbildung eintritt, wie es ansonsten der Fall ist, wenn Naturstoffe wie Oligopeptide, Peptid-Zuckergemische usw. durch biologische Prozesse abgebaut werden. Derartige Stoffe eignen sich hervorragend zur Düngung von Pflanzen.

### Nachbehandlung der Verfahrensprodukte

Sind in den nach den Verfahren (1) bis (7) hergestellten Produkten noch freie Aminogruppen vorhanden, so lassen sich diese Produkte durch Behandlung mit anorganischen oder organischen Säuren in die entsprechenden Säure-Additions-Salze überführen. Hierbei verfährt man in der Weise, daß man die Produkte in wäßrigem Medium gegebenenfalls bei erhöhter Temperatur mit der jeweiligen Säure verrührt. Die Reaktionsprodukte werden durch Filtration isoliert.

Sind in den nach den Verfahren (1) bis (7) hergestellten Produkten noch freie Carboxylgruppen vorhanden, so lassen sich diese Produkte durch Behandlung mit Basen in die entsprechenden Salze überführen. Hierbei verfährt man in der Weise, daß man die Produkte in wäßrigem Medium gegebenenfalls bei erhöhter Temperatur mit der jeweiligen Base verrührt. Die Reaktionsprodukte

werden durch Filtration isoliert.

Darüber hinaus können erfindungsgemäße Produkte auch in Komplex-Verbindungen überführt werden. Hierbei verfährt man in der Weise, daß man die Produkte in wäßrigem Medium gegebenenfalls bei erhöhter Temperatur mit einem Metallsalz verrührt. Die Reaktionsprodukte werden durch Filtration isoliert. Sie eignen sich sehr gut zur Düngung von Pflanzen.

## Spezielle Verfahrensvarianten

Eine bevorzugte Ausführung des Verfahrens (2) besteht darin, daß man die Fehlerstellenerzeugung in nahezu fehlerstellenfreier Azulminsäure nach der Variante (a) des Verfahrens (A) mit Salpetersäure vornimmt, die Reaktionstemperatur zwischen 20 und 30°C hält, und die dabei in topochemischer Reaktion entstehenden modifizierten Azulminsäuren, in denen 30 bis 50% der vorhandenen Aminogruppen in Form ionischer Gruppen der Konstitution

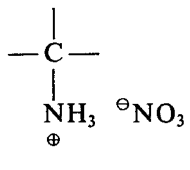

vorliegen, gegebenenfalls nach vorheriger Begasung mit Ammoniak mit Carbonylverbindungen im wäßrigen Medium kondensiert. Man führt die Begasung mit Ammoniak, bei der Spuren an freier Salpetersäure in Ammoniumnitrat umgewandelt werden, zweckmäßigerweise in fester Phase im Wirbelbett aus. Die hierbei entstehenden Produkte stellen wertvolle Düngemittel dar, weil sowohl der organisch gebundene Stickstoff der Azulminsäuren als auch der anorganisch gebundene Stickstoff der Ammoniumsalze für die Pflanzen verfügbar ist.

Eine weitere bevorzugte Ausführungsform des Verfahrens (2) besteht darin, daß man die Fehlerstellenerzeugung in nahezu fehlerstellenfreier Azulminsäure nach Variante (a) des Verfahrens (A) mit Phosphorsäure oder phosphoriger Säure vornimmt, die Reaktionstemperatur dabei relativ niedrig hält, vorzugsweise zwischen 20°C und 55°C, und die dabei in topochemischer Reaktion entstehenden, nur wenig $F_2$-Fehlerstellen aufweisenden modifizierten Azulminsäuren, die Phosphorsäure bzw. phosphorige Säure salzartig gebunden enthalten, gegebenenfalls nach vorheriger Begasung mit Ammoniak mit Carbonylverbindungen kondensiert. Die Begasung mit Ammoniak wird wiederum zweckmäßigerweise in fester Phase im Wirbelbett vorgenommen. Auch hierbei werden sehr wirksame Düngemittel erhalten.

Eine bevorzugte Ausführungsform des Verfahrens (1) besteht darin, daß man die Fehlerstellenerzeugung in nahezu fehlerstellenfreier Azulminsäure mit 1 bis 4 Mol an 1molarer Phosphorsäure vornimmt, die überschüssige Phosphorsäure anschließend durch Zugabe von Calciumchlorid als Calciumphosphat, durch Zugabe von Magnesiumchlorid als Magnesiumphosphat oder durch Zugabe von Ammoniak und Magnesiumsalzen als Ammonium-Magnesiumphosphat fällt und danach gegebenenfalls in Anwesenheit von Zusatzstoffen mit Carbonylverbindungen kondensiert. Besonders bevorzugte Zusatzstoffe sind in diesem Fall pflanzliche Aschen, unlösliche Polychinone, Additions- bzw. Kondensationsprodukte des Benzochinons mit Aminen, insbesondere mit Ammoniak, ferner Ligninsulfonsäuren, Huminsäuren, diverse Flugaschen, Bauxit, Aluminiumoxid, Cobaltmolybdat, Siliciumdioxid, Aktivkohle, Zirkondioxid, Nickeloxid, Palladiumoxid und Bariumoxid. Weiterhin kommen als bevorzugte Zusatzstoffe auch Zucker, wie Rohrzucker und andere keine freien Aldehydgruppen aufweisenden Zucker, oder auch aus Formaldehyd hergestellte Formose-Zuckergemische in Frage. Diese verschiedensten Zuckerarten können in Kanälen und Poren der starren Azulminsäurekörper fixiert werden. Darüber hinaus können die verschiedenen Zucker auch in Form ihrer meist schwer löslichen Calcium-Komplexe auf den Azulminsäuren aufziehen.

Eine weitere Ausführung des Verfahrens (1) besteht darin, daß man die Fehlerstellenerzeugung in nahezu fehlerstellenfreien Azulminsäuren nach Variante (b) des Verfahrens (A) mit Hilfe starker Basen, wie z. B. Kaliumhydroxid, unter Einhaltung relativ langer Reaktionszeiten vornimmt und die dabei in topochemischer Reaktion entstehenden, Polyelektrolytcharakter besitzenden modifizierten Azulminsäuren gegebenenfalls in Anwesenheit von Zusatzstoffen mit Carbonylverbindungen kondensiert.

Eine weitere wichtige Ausführung des Verfahrens (2) besteht darin, daß man mit Calciumhydroxid komplexierte Azulminsäure mit Saccharose, Zuckern, Glukose oder Formose-Präparaten, die durch Formaldehyd-Kondensation mit Calciumhydroxid hergestellt werden, umsetzt. Hierbei bilden sich zum Beispiel bei der Verwendung von Saccharose Azulminsäuren, die mit Saccharose-Calciumoxid-Komplexen der Zusammensetzung $3\,CaO \cdot C_{12}H_{22}O_{11}$ beladen sind.

Werden bei den beschriebenen Verfahren modifizierte Azulminsäuren als Ausgangsstoffe eingesetzt, so ist es nicht unbedingt erforderlich, letztere nach ihrer Herstellung zu isolieren. Es ist vielmehr druchaus möglich, zunächst die modifizierten Azulminsäuren zu synthetisieren und diese

dann ohne vorherige Isolierung direkt mit Carbonylverbindungen zu kondensieren.

Im Falle der beschriebenen Verfahren kann die Fehlerstellenerzeugung und die gleichzeitige oder anschließende Kondensation mit Carbonylverbindungen nicht nur in Wasser, sondern auch in solchen hydrolysierenden Medien vorgenommen werden, in denen das Wasser partiell durch Schwefelwasserstoff ersetzt wurde, oder in denen das Wasser Natriumsulfide, Ammoniumpolysulfide oder Kaliumhydrogensulfid enthält. Arbeitet man in solchen Fällen bei Temperaturen zwischen 70°C und 100°C, so werden kleine Mengen an abgespaltener Blausäure bei gleichzeitiger Fehlerstellenerzeugung in Kohlenoxysulfid und Ammoniak umgewandelt.

In den erfindungsgemäß verwendbaren Produkten kann die Zahl der Fehlerstellen gegebenenfalls nach denjenigen Methoden erhöht werden, die bereits im Zusammenhang mit der Herstellung der modifizierten Azulminsäuren beschrieben wurden.

Häufig ist es von Vorteil, die erfindungsgemäß verwendbaren Produkte nach ihrer Herstellung mit Basen zu behandeln, um zum Beispiel enthaltene Metallsalze in Metallhydroxide bzw. Oxide zu überführen, oder um zum Beispiel noch enthaltene Aldehyde abreagieren zu lassen. Zu diesem Zweck werden erfindungsgemäß verwendbare Produkte vorzugsweise mit Ammoniak, primären oder sekundären Aminen behandelt bzw. begast oder mit Hydrazinhydrat, wäßrigen Cyanamid-Lösungen oder wäßriger Ammoniak-Lösung umgesetzt. Bei der Einwirkung von Ammoniak werden zum Beispiel in den mit Formaldehyd kondensierten Produkten noch enthaltene kleine Mengen an Formaldehyd in Hexamethylentetramin bzw. Hexahydrotriazine überführt. Oft empfiehlt es sich, eine Nachbehandlung mit 25%iger wäßriger Ammoniak-Lösung vorzunehmen.

Wird bei den beschriebenen Umsetzungen eine ausreichende Menge an Carbonylverbindungen zur Stabilisierung verwendet, so entstehen erfindungsgemäße Produkte, die weder in trockenem noch in feuchtem Zustand bei Raumtemperatur oder auch bei höheren Temperaturen Cyanwasserstoff abspalten. Dies zeigt sich unter anderem darin, daß sich die erfindungsgemäßen Produkte im Gegensatz zu nicht stabilisierten Azulminsäuren gegenüber standardisierten Trockenhefe-Präparaten völlig indifferent verhalten und die Aktivität der Hefe bei der alkoholischen Vergärung von Rohrzucker unter schonenden Bedingungen in keiner Weise vermindern. So wird die Rohrzuckervergärung mit standardisierter Trockenluft in gepufferter wäßriger Lösung bei 35°C durch gleichzeitig anwesende, mit Formaldehyd kondensierte Azulminsäure nicht beeinträchtigt, während bei der Durchführung des gleichen Tests in Gegenwart von nicht stabilisierter Azulminsäure ein wesentlich verlangsamter Rohrzuckerumsatz festgestellt wird. Im letzten Fall werden also die Hefeenzyme durch die im Reaktionsgemisch enthaltenen Cyanidionen so stark desaktiviert, daß die alkoholische Gärung drastisch gehemmt wird.

## Einsatz erfindungsgemäß verwendbarer Produkte

Die erfindungsgemäß verwendbaren Produkte eignen sich als Agrochemikalien. Hierunter sind Wirkstoffe zu verstehen, die für die verschiedenartigsten Verwendungen in der Landwirtschaft und im Gartenbau in Frage kommen.

So eignen sich die erfindungsgemäß verwendbaren Stoffe zum Beispiel als Düngemittel sowohl zur Versorgung von Pflanzen mit Mikronährstoffen als auch zur Versorgung von Pflanzen mit Makronährstoffen; insbesondere eignen sie sich als Düngemittel mit Langzeitwirkung. Von besonderem Interesse sind hierbei solche erfindungsgemäß verwendbaren Stoffe, die von Pflanzen benötigte Ionen, wie Ammonium-Ionen, Lithium-, Natrium-, Kalium-, Beryllium-, Magnesium-, Calcium-, Strontium-, Barium-, Aluminium-, Zink-, Mangan-, Nickel-, Cobalt- oder Eisen-Ionen enthalten.

Weiterhin von besonderem Interesse als Düngemittel sind solche erfindungsgemäß verwendbaren Stoffe, die Anionen, wie Chlorid, Nitrat, Sulfat und/oder Phosphat enthalten.

Besonders bevorzugt als Düngemittel sind solche erfindungsgemäß verwendbaren Wirkstoffe, die mehrere der vorgenannten Ionensorten nebeneinander enthalten. Beispielhaft genannt seien Stoffe, die sowohl Kalium- und/oder Ammonium-Ionen als auch Nitrat- und/oder Phosphat-Ionen enthalten.

Von besonderem Interesse als Düngemittel sind außerdem solche erfindungsgemäß verwendbaren Wirkstoffe, die gegebenenfalls neben Nährstoffionen auch organische Stoffe enthalten. Speziell genannt seien in diesem Zusammenhang Holzpulver, Ligninpulver, Ligninsulfonsäuren, ammonifizierte Ligninsulfonsäuren, Humus, Huminsäuren, ammonifizierte Huminsäuren, Torf, Proteine und der Abbauprodukte, z. B. Hydrolyseprodukte von Hefen, Algenmaterial (Alginate), Polypeptiden, wie Wolle und Gelatine, Fischmehl und Knochenmehl, ferner Aminosäuren, Oligopolypeptide, Pektine, Monosaccharide, wie Glucose und Fructose, Disaccharide, wie Saccharose, Oligosaccharide, Polysaccharide, wie Stärke und Cellulose, weiterhin Hemicellulosen, homogenisierte Materialien pflanzlichen und tierischen Ursprungs, Aktivkohlen sowie Aschen, die durch Partialoxidation, vollständige Oxidation oder Verbrennung organischer, durch Photosynthese gebildeter Stoffe oder üblicher Brennstoffe erhältlich sind, wobei Tannenasche, Ginsterasche, Asche von serbischen Fichten, Eichenasche, Birkenasche, Buchenasche, Weidenasche und Tabakblätter-Asche speziell genannt seien.

Bevorzugt verwendbar als Düngemittel sind außerdem solche erfindungsgemäß verwendbaren Wirkstoffe, die gegebenenfalls neben Nährstoffionen auch handelsübliche Düngemittel enthalten. Speziell genannt seien in diesem Zusammenhang als derartige handelsübliche Düngemittel Superphosphat, Thomasschlacke, Rhenaniaphosphat, Phosphorit, Kalkstickstoff, Kalkammonsalpeter, Leunasalpeter, Kaliumphosphate, Kaliumnitrat und Ammoniumnitrat, ferner Harnstoff-Formaldehyd-Kondensate, Harnstoff-Crotonaldehyd-Kondensate, Harnstoff-Isobutyraldehyd-Kondensate sowie Kondensate aus Dicyandiamid, Melamin oder Oxamid mit Aldehyden, wie Formaldehyd, Acetaldehyd, Crotonaldehyd oder Isobutyraldehyd.

Bevorzugt verwendbar als Düngemittel sind auch solche erfindungsgemäß verwendbaren Stoffe, die gegebenenfalls neben Nährstoffen auch biologisch aktive Gartenerde enthalten.

Weiterhin eignen sich die erfindungsgemäß verwendbaren Stoffe als Bodenverbesserungsmittel. Bevorzugt verwendbar sind zu diesem Zweck solche erfindungsgemäß verwendbaren Stoffe, die Holzpulver beziehungsweise pulverisiertes pflanzliches Material enthalten. Bevorzugt verwendbar als Bodenverbesserungsmittel sind auch solche Azulminsäuren, die zunächst partiell (nur etwa jede vierte Aminogruppe in statistischer Verteilung) mit Carbonylverbindungen, speziell Formaldehyd kondensiert wurden und dann in Gegenwart von Calciumhydroxid mit Formaldehyd umgesetzt werden. Unter diesen Bedingungen entstehen aus monomerem Formaldehyd sehr rasch in situ Glykolaldehyd ($C_2$-Aldehyd), Glyzerinaldehyd ($C_3$-Aldehyd) und weitere $C_4$—$C_7$-Hydroxyaldehyde, die mit verbleibenden Aminogruppen der Azulminsäuren unter Kondensationsreaktionen reagieren können und ebenfalls zu einer partiellen Stabilisierung der erfindungsgemäß verwendbaren Stoffe führen können. Aufgrund der Klebrigkeit der anfallenden beigemengten höhermolekularen karamelisierten Zucker können diese Produkte völlig formaldehydfrei sprühgetrocknet werden. Sie stellen braunschwarze, humusartige Stoffe mit krümliger Struktur dar, die einerseits als Bodenverbesserungsmittel, andererseits als Pflanzennährstoffe von Interesse sind. Die hierbei auf der Matrix aufziehenden Zuckergemische können mit relativ großen Mengen an Calciumhydroxid oder Magnesiumhydroxid komplexiert werden, wobei Zuckerkomplexe entstehen, wie sie z. B. von der Saccharose bekannt sind, wobei pro Mol Saccharose 3 Mol Calciumoxid gebunden werden. Die geringe Löslichkeit derartiger Komplexe erschwert in günstiger Weise die rasche Auswaschung der Zucker im Falle der Verwendung der erfindungsgemäß verwendbaren Azulminsäure-Formose-Calciumhydroxid-enthaltenden Stoffe bei ihrer Anwendung auf dem Agrarsektor.

Diejenigen erfindungsgemäß verwendbaren Stoffe, die einen hohen Gehalt an Fehlerstellen aufweisen, besitzen Polyelektrolytcharakter und können im Boden als Düngemittel mit Ionenaustauscher-Eigenschaften fungieren. Hierbei werden die von den Pflanzen benötigten Ionen, z. B. Kalium- und/oder Ammoniumionen an das Erdreich, beziehungsweise an das Substrat abgegeben, während andere Ionen gebunden werden.

Infolge der hohen Sorptionsfähigkeit und des guten Komplexbildungsvermögens können die erfindungsgemäß verwendbaren Stoffe auch zur Fixierung von Schadstoffen im Boden verwendet werden. So ist es zum Beispiel möglich, im Boden vorhandene unerwünschte Schwermetallionen, wie zum Beispiel Ionen des Bleis und des Quecksilbers mit Hilfe der erfindungsgemäß verwendbaren Stoffe so fest zu binden, daß Pflanzenbeschädigungen nicht mehr zu befürchten sind. Ferner können auch Ölverunreinigungen, Überdosierungen an Pflanzenschutzmitteln oder zu hohe Salzkonzentrationen in Substraten durch Zugabe erfindungsgemäß verwendbarer Stoffe beseitigt werden.

Erfindungsgemäß verwendbare Stoffe, die neben anderen Pflanzennährstoffen auch Torf enthalten, lassen sich durch Zusatz von Bindemitteln, wie Stärke, abgebauten Cellulosen, Alginaten und Pektinstoffen, in technisch einfacher Weise zur Herstellung von Torfpreßtöpfen für den gärtnerischen Betrieb verwenden. Hierbei ist es zweckmäßig, daß der Volumenanteil an Weiß- und Schwarztorf im Substrat etwa 1 : 1 beträgt.

Erfindungsgemäß verwendbare Stoffe, die neben anderen Pflanzennährstoffen etwa 20 bis 40% Gewichtsprozent an Torf enthalten, eignen sich auch gut zur Abdeckung für Böden und Substrate sowie Saatreihen, da durch die schwarze Farbe der erfindungsgemäßen Stoffe ein gutes erdiges Aussehen gewährleistet ist, Bodenverkrustungen verhindert werden und raschere Keimung in Saatreihen bewirkt wird.

Erfindungsgemäß verwendbare Stoffe, die Torf enthalten, eignen sich auch zur Verhinderung oder Abschwächung von Geruchsbildungen bei Verwesungsprozessen.

Erfindungsgemäß verwendbare Stoffe, die neben anderen Pflanzennährstoffen auch Torf enthalten, lassen sich durch Zusatz von Stärkeklebern, Hemicellulosen oder Alginaten in geformte, luftdurchlässige und Feuchtigkeit haltende Materialien überführen, die als Packmaterialien für den Pflanzentransport geeignet sind.

Erfindungsgemäß verwendbare Stoffe eignen sich auch zum Schutz von Pflanzen oder Pflanzenteilen gegen Schädlinge, wie zum Beispiel Raupen. Verwendet man beispielsweise eine Spritzbrühe auf Basis eines erfindungsgemäß verwendbaren Stoffes, der 4—12 Gewichtsprozent an Fehlerstellen der Formel

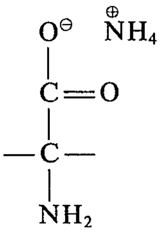

enthält, im Gemisch mit 10 Gewichtsprozent an karamelisierter Formose pro 100 Gewichtsprozent an erfindungsgemäß verwendbarem Produkt zum Besprühen des Blattwerkes von Obstbäumen, so entsteht auf den Blättern eine haftende, klebrige Schicht, durch welche einerseits eine Schädigung der Blätter durch Schädlinge, wie zum Beispiel Raupen, vermindert wird und andererseits eine Blattdüngung erzielt wird.

## Applikation der Wirkstoffe

Die erfindungsgemäß verwendbaren Stoffe können als solche oder in ihren Formulierungen zur Versorgung von Pflanzen mit Nährstoffen bzw. als Bodenverbesserungsmittel eingesetzt werden.

Hierbei können die erfindungsgemäß verwendbaren Stoffe in die üblichen Formulierungen übergeführt werden, wie Emulsionen, Spritzpulver, Suspensionen, Pulver, Stäubemittel, Schäume, Pasten, Granulate, Suspensions-Emulsionskonzentrate, Saatgutpuder, Wirkstoff-imprägnierte Natur- und synthetische Stoffe oder Feinstverkapselungen in polymeren Stoffen und in Hüllmassen für Saatgut.

Diese Formulierungen werden in bekannter Weise hergestellt, z. B. durch Vermischen der Wirkstoffe mit Streckmitteln, also flüssigen Lösungsmitteln, und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z. B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z. B. Erdölfraktionen, Alkohole, wie Butanol oder Glycol sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser;
als feste Trägerstoffe: natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate;
als feste Trägerstoffe für Granulate: gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehle, Kokosnußschalen, Maiskolben und Tabakstengel;
als Emulgier- und/oder schaumerzeugende Mittel: nichtionogene und anionische Emulgatoren, wie Polyoxyäthylen-Fettsäure-Ester, Polyoxyäthylen-Fettalkohol-Äther, z. B. Alkylaryl-polyglykol-äther, Alkylsulfonate, Alkylsulfate, Arylsulfonate sowie Eiweißhydrolysate;
als Dispergiermittel: z. B. Lignin—Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z. B. Eisenoxid, Titanoxid, Ferrocyanblau und organische Farbstoffe, wie Alizarin-, Azo-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Die erfindungsgemäß verwendbaren Stoffe können in den Formulierungen in Mischung mit anderen Düngemitteln oder pestiziden Wirkstoffen vorliegen.

Die Wirkstoffe können beim Einsatz als Düngemittel bzw. als Bodenverbesserungsmittel sowohl in Form der Stoffe selbst als auch in Form ihrer Formulierungen oder der daraus bereiteten Anwendungsformen, wie gebrauchsfertige Emulsionen, Schäume, Suspensionen, Pulver, Pasten und Granulate angewendet werden. Die Anwendung geschieht nach den in der Landwirtschaft und im Gartenbau üblichen Methoden, also z.B. durch direktes Einbringen in den Boden, durch Gießen, Verspritzen, Versprühen, Verstreuen, Verstäuben usw. Als spezielle Applikationsarten seien genannt: Wurzelapplikation, Blattapplikation, Stamminjektion und Rindenapplikation. Bei der Wurzelapplikation kann der Dünger entweder mit dem Kultursubstrat vermischt oder auch in Bodenfurchen

eingebracht werden. Ferner ist es möglich, den Dünger mit Hilfe einer Düngerlanze sowie durch Schlag- oder Bohrlöcher in den tieferen Wurzelbereich einzuführen. Die Blattapplikation erfolgt in der Regel dadurch, daß man die Pflanzen mit einer Düngemittel-Zubereitung besprüht oder Pflanzen bzw. Pflanzenteile in eine Düngemittel-Zubereitung eintaucht. Bei der Stamminjektion wird der Dünger durch Bohrlöcher an Baumstämmen oder Ästen direkt in die Pflanzen eingeführt. Rindenapplikationen können vorgenommen werden, indem man das kahle Holz mit der Düngemittel-Zubereitung bespritzt, oder auch indem man mit Nährstoffen imprägnierte Bänder z. B. aus Textil, Papier oder Schaumstoff auf Baumstämme oder Äste, — gegebenenfalls nach teilweiser oder vollständiger Entfernung der Borken- bzw. Korkschicht in der Behandlungszone —, auflegt. Auch ist eine Rindenapplikation mit Hilfe nährstoffhaltiger Pasten möglich.

Die eingesetzte Menge an erfindungsgemäß verwendbaren Wirkstoffen kann in größeren Bereichen variiert werden. Bei einer Anwendung als Dünger, bzw. Bodenverbesserungsmittel hängt sie im wesentlichen ab von der Bodenart sowie vom Nährstoffbedarf der jeweiligen Pflanzen. Im allgemeinen liegen die Aufwandmengen an Wirkstoff zwischen 0,1 und 200 kg/ha, vorzugsweise zwischen 1 und 100 kg/ha. — Werden die erfindungsgemäß verwendbaren Stoffe für andere Zwecke verwendet, wie zur Abdeckung von Substraten, zur Herstellung von Packmaterialien für Pflanzen, zum Schutz von Pflanzen oder Pflanzenteilen, zur Herstellung von Torfpreßtöpfen oder zur Bindung von unerwünschten Geruchsstoffen, so ist die eingesetzte Menge an Wirkstoff dem jeweiligen Bedarf angepaßt.

Die gute Wirksamkeit der erfindungsgemäß verwendbaren Stoffe als Düngemittel geht aus den nachfolgenden Beispielen hervor.

## Verwendungsbeispiele

### Präparate-Liste

Präparat (A) = Mit Formaldehyd stabilisierte Azulminsäure, in der etwa 78% der enthaltenen Amino-Gruppen kondensiert sind.
Zusammensetzung:
35,3% C; 4,0% H; 39,1% N; 21,5% O

Präparat (B) = Azulminsäure, in der zunächst durch Verseifung etwa 7 Gew.-% an Fehlerstellen der Formel

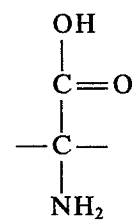

erzeugt werden und danach etwa 13 Gew.-% Phosphorsäure an der Matrix fixiert wurden.
Zusammensetzung:
33,3% C; 4,3% H; 28,1% N; 4,1% P; 3,2% K

Präparat (C) = Azulminsäure, in der durch saure Verseifung zunächst Fehlerstellen der Formel

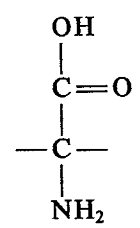

erzeugt wurden und danach etwa 12,5 Gew.-% Phosphorsäure an der Matrix fixiert wurden.
Zusammensetzung:
36,1% C; 3,9% H; 32,1% N; 24,1% O; 3,9% P

Präparat (D) = mit Formaldehyd stabilisierte Azulminsäure

Präparat (E) = mit Formaldehyd stabilisierte Azulminsäure

Präparat (F) = mit Formaldehyd stabilisierte Azulminsäure

Präparat (G) = mit Formaldehyd stabilisierte Azulminsäure

## Beispiel A

### Düngungsversuch/Freiland

Versuchspflanze: Gras (Rasen)

Rasenflächen einer Größe von 1,5 $m^2$ werden mit der jeweils gewünschten Menge an Präparat an der Oberfläche gedüngt.

Nach 6 Wochen wird ausgewertet. Es wird jeweils der Zuwachs und das Aussehen der Grasfläche beurteilt. Dabei bedeuten die Bonitierungszahlen:

1 = sehr starker Zuwachs, dunkelgrün
2 = starker Zuwachs, dunkelgrün
3 = mittlerer Zuwachs, grün
4 = geringer Zuwachs, hellgrün
5 = Kontrolle (ohne Düngung)

Wirkstoff-Präparate, Aufwandmengen und Versuchsergebnisse gehen aus der folgenden Tabelle hervor:

Tabelle A

Düngungsversuch/Freiland

| Präparat | Stickstoff pro $m^2$ (g) | Präparatmenge in g 1 $m^2$ | pro 1,5 $m^2$ | Bonitierungszahlen Wieder-holung 1 | Wieder-holung 2 | ∅ |
|---|---|---|---|---|---|---|
| A | 10 | 25,6 | 38,4 | 5 | 4 | 4,5 |
| | 25 | 64 | 96 | 4 | 3 | 3,5 |
| | 50 | 128 | 192 | 3 | 2–3 | 2,8 |
| | 100 | 256 | 384 | 1–2 | 1 | 1,3 |
| B | 10 | 31,2 | 46,8 | 4–5 | 4–5 | 4,5 |
| | 25 | 78 | 117 | 3–4 | 3–4 | 3,5 |
| | 50 | 156 | 234 | 2 | 2 | 2 |
| | 100 | 312 | 468 | 1 | 1–2 | 1,3 |
| C | 10 | 35,6 | 53,4 | 4 | 4–5 | 4,3 |
| | 25 | 89 | 133,5 | 3 | 4 | 3,5 |
| | 50 | 178 | 267 | 1–2 | 2 | 1,8 |
| | 100 | 356 | 534 | 2 | 2 | 2 |
| Kontrolle | – | – | – | 5 | 5 | 5 |

Beispiel B

Düngungsversuch/Freiland

Versuchspflanze: Topfchrysanthemen
Bodenart: Sandiger Lehm + 30 Vol.-% Torf pro 1,5 l Gefäß

Jeder Topf wird zunächst mit einer Basisdüngung versetzt, und zwar werden pro Liter Boden hinzugegeben:

0,25 g Phosphorpentoxid in Form von Superphosphat
0,4 g Kaliumoxid in Form von Kalimagnesia

Danach wird das Versuchspräparat in der jeweils gewünschten Menge auf die Bodenoberfläche gegeben.
Nach 3 Monaten wird ausgewertet. Es wird jeweils der Zuwachs und das Aussehen der Pflanzen (Blätter) beurteilt. Dabei bedeuten die Bonitierungszahlen:

1 = dunkelgrün
2 = mittelgrün
3 = hell — mittelgrün
4 = hellgrün
5 = hellgrün — gelb

Wirkstoff-Präparate, Aufwandmengen und Versuchsergebnisse gehen aus der folgenden Tabelle hervor:

Tabelle B

Düngungsversuch/Freiland

| Präparat | Stickstoff (g/l Boden) | Präparat-menge g/l Boden | Präparat-menge pro 1,5 l Boden | Wuchs-höhe in cm | Blattfarbe Bonitur-zahl | Antho-cyan-färbung | Blatt-schäden |
|---|---|---|---|---|---|---|---|
| A | 0,5 | 1,28 | 1,9 | 18 | 2 | + | leicht |
| | 1 | 2,56 | 3,8 | 19 | 2 | + | leicht |
| | 2,5 | 6,39 | 9,6 | 20 | 1 | + | stark |
| | 5 | 12,78 | 19,2 | 20 | 1 | + | stark |
| B | 0,5 | 1,56 | 2,3 | 19 | 3 | + | – |
| | 1 | 3,12 | 4,7 | 22 | 3 | + | leicht |
| | 2,5 | 7,78 | 11,7 | 23 | 2–3 | + | stark |
| | 5 | 15,56 | 23,4 | 16 | 2 | + | sehr stark |
| C | 0,5 | 1,78 | 2,7 | 25 | 3 | + | – |
| | 1 | 3,56 | 5,3 | 26 | 2 | + | – |
| | 2,5 | 8,89 | 13,3 | 30 | 2 | + | – |
| | 5 | 17,80 | 26,7 | 27 | 1–2 | + | – |
| Kontrolle | – | – | – | 18 | 5 | + | – |

Beispiel C

Düngungsversuch/Freiland

Versuchspflanze: Gras »Berliner Tiergarten«, 3 g je Gefäß
Bodenart: Sandiger Lehm + 30 Vol.-% Torf
Gefäß: Plastiktöpfe, 10 l Inhalt, gefüllt mit 8,5 kg Boden

Jeder Topf wird zunächst mit einer Basisdüngung versetzt, und zwar werden pro Liter Boden hinzugegeben:

0,25 g Phosphorpentoxid in Form von Superphosphat
0,40 g Kaliumoxid in Form von Kalimagnesia.

Danach wird das Versuchs-Präparat in der jeweils gewünschten Menge auf die Bodenoberfläche gegeben.
Nach 7 Wochen bzw. 11 Wochen wird ausgewertet. Es werden jeweils der Zuwachs und das Aussehen der Pflanzen beurteilt. Dabei bedeuten die Bonitierungszahlen:

1 = dunkelgrün
2 = mittelgrün
3 = mittelgrün — gelb

Wirkstoff-Präparate, Aufwandmengen und Versuchsergebnisse gehen aus der folgenden Tabelle hervor.

Tabelle C

Düngungsversuch/Freiland

| Präparat | Stickstoff g pro l Boden | Präparatmenge g pro l Boden | Trockensubstanz g/Gefäß 1. Schnitt | 2. Schnitt | 1. + 2. | Bonitierungszahl |
|---|---|---|---|---|---|---|
| A | 0,5 | 1,28 | 7,2 | 4,4 | 11,6 | 3 |
| | 1,0 | 2,56 | 10,3 | 6,6 | 16,9 | 3 |
| | 2,5 | 6,39 | 8,5 | 11,3 | 19,8 | 3 |
| | 5,0 | 12,78 | 3,9 | 7,2 | 11,1 | 2 |
| B | 0,5 | 1,56 | 10,4 | 5,1 | 15,6 | 3 |
| | 1,0 | 3,12 | 13,9 | 8,2 | 22,1 | 2 |
| | 2,5 | 7,76 | 23,2 | 9,9 | 33,1 | 1–2 |
| | 5,0 | 15,56 | — | — | — | — |
| C | 0,5 | 1,78 | 5,2 | 5,4 | 10,6 | 3 |
| | 1,0 | 3,56 | 6,4 | 3,9 | 10,3 | 3 |
| | 2,5 | 8,89 | 11,4 | 6,3 | 17,7 | 2 |
| Kontrolle | — | — | 4,2 | 2,8 | 7,0 | 3 |

Beispiel D

Düngungsversuch/Freiland — Gewächshaus

| | |
|---|---|
| Versuchspflanze: | Gras »Berliner Tiergarten«, 3 g je Gefäß |
| Bodenart: | Sandiger Lehm/30 Vol.-% Torf |
| Gefäß: | Plastiktöpfe, 10 l Inhalt, gefüllt mit 8,5 kg Boden. |

Jeder Topf wird zunächst mit einer Basisdüngung versetzt, und zwar werden pro Liter Boden hinzugegeben.

0,25 g Phosphorpentoxid in Form von Superphosphat
0,40 g Kaliumoxid in Form von Kalimagnesia.

Danach wird das Versuchs-Präparat in der jeweils gewünschten Menge auf die Bodenoberfläche gegeben.

Nach 7 Wochen, 11 Wochen, 4 Monaten, $5^1/_2$ Monaten, 8 Monaten und $10^1/_2$ Monaten wurde ausgewertet. Dabei werden jeweils die Schnittgewichte ermittelt. Bis nach dem 2. Schnitt standen die Gefäße im Freiland, danach im Gewächshaus.

Wirkstoff-Präparate, Aufwandmengen und Versuchsergebnisse gehen aus der folgenden Tabelle hervor.

Tabelle D

Düngungsversuch / Freiland – Gewächshaus

| Präparat | g N pro l Boden | Ertrag g durchschnittliche Trockenmasse pro Gefäß – Schnitt-Einzelgewichte | | | | | | Schnitt-Summengewichte | | | | | |
|---|---|---|---|---|---|---|---|---|---|---|---|---|---|
| | | 1. Schnitt 17.9.74 | 2. Schnitt 16.10.74 | 3. Schnitt 23.11.74 | 4. Schnitt 14.2.74 | 5. Schnitt 1.4.75 | 6. Schnitt 24.6.75 | 1. Schnitt | 2. Schnitt | 3. Schnitt | 4. Schnitt | 5. Schnitt | 6. Schnitt |
| – (ohne Dünger) | – | 4,2 | 2,8 | 3,3 | 1,8 | 1,4 | 4,8 | 4,2 | 7,0 | 10,3 | 12,1 | 13,5 | 18,3 |
| A | 0,5 | 7,2 | 4,4 | 4,4 | 2,3 | 2,7 | 8,2 | 0,5 | 7,7 | 12,1 | 16,5 | 18,8 | 21,5 |
| | 1 | 10,3 | 6,6 | 6,0 | 4,1 | 5,9 | 10,8 | 10,3 | 16,9 | 22,9 | 27,0 | 32,9 | 43,7 |
| | 2,5 | 8,5 | 11,3 | 7,2 | 3,6 | 6,3 | 16,7 | 8,5 | 19,8 | 27,0 | 30,6 | 36,9 | 53,6 |
| B | 0,5 | 10,4 | 5,1 | 4,8 | 2,7 | 3,0 | 8,3 | 10,4 | 15,5 | 20,3 | 23,0 | 26,0 | 34,3 |
| | 1 | 13,9 | 8,2 | 5,6 | 3,6 | 4,0 | 9,0 | 13,9 | 22,1 | 27,7 | 31,3 | 35,3 | 44,3 |
| | 3,5 | 23,2 | 9,9 | 8,2 | 2,7 | 6,2 | 20,1 | 23,2 | 33,1 | 41,3 | 44,0 | 50,2 | 70,3 |
| C | 0,5 | 5,2 | 5,4 | 3,4 | 2,4 | 2,1 | 6,0 | 5,2 | 10,6 | 14,0 | 16,4 | 18,5 | 24,5 |
| | 1 | 6,4 | 3,9 | 4,5 | 2,9 | 3,2 | 6,7 | 6,4 | 10,3 | 14,8 | 17,7 | 20,9 | 27,6 |
| | 2,5 | 11,4 | 6,3 | 6,4 | 3,3 | 6,1 | 10,4 | 11,4 | 17,7 | 24,1 | 27,4 | 33,6 | 43,9 |

Beispiel E

Düngungsversuch/Freiland

Versuchspflanze: Topfchrysanthemen; Sorte: Yellow Delaware
Bodenart: Sandiger Lehm + 30 Vol.-% Torf (Weißtorf)
Versuchsgefäß: Plastiktöpfe, 1,5 l Inhalt

Jeder Topf wird zunächst mit einer Basis-Düngung versetzt, und zwar werden pro Liter Boden hinzugegeben:

0,25 g Phosphorpentoxid in Form von Superphosphat,
0,40 g Kaliumoxid in Form von Kalimagnesia.

Danach wird das Versuchs-Präparat in der jeweils gewünschten Menge auf die Bodenoberfläche gegeben.

Nach 3 Monaten wird ausgewertet. Es werden jeweils die durchschnittliche Wuchshöhe und das Aussehen der Pflanzen beurteilt. Dabei bedeuten die Bonitierungszahlen:

1 = tief — dunkelgrün
3 = mittelgrün
5 = hellgrün
9 = gelb — chlorotisch

Wirkstoff-Präparate, Aufwandmengen und Versuchsergebnisse gehen aus der folgenden Tabelle hervor.

Tabelle E

Düngeversuch/Freiland

| 2 Präparate | g N pro l Boden | Durchschnittliche Wuchshöhe in cm | Kennzahl Bonitierung der Blatt-Grünfärbung |
|---|---|---|---|
| (Ohne Dünger) | — | 18 | 7 |
| A | 0,5 | 18 | 2 |
| | 1 | 19 | 2 |
| | 2,5 | 20 | 1 |
| B | 0,5 | 19 | 3 |
| | 1 | 22 | 2 |
| | 2,5 | 23 | 2 |
| C | 0,5 | 25 | 3 |
| | 1 | 26 | 2 |
| | 2,5 | 30 | 2 |

## Beispiel F

### Düngungsversuch/Gewächshaus

Versuchspflanze: Chrysanthemum indicum; Sorte: Yellow Delaware
Bodenart: Sandiger Lehmboden
Gefäß: Blumentöpfe mit 900 g Boden
Bodenfeuchte bei Kultur: etwa 70% der maximalen Wasserkapazität bei 20° C.

Das Versuchspräparat wird in der jeweils gewünschten Menge auf die Bodenoberfläche gegeben. In verschiedenen Zeitabständen wird ausgewertet. Dabei wird jeweils das durchschnittliche Frischsubstanzgewicht und die Wuchshöhe der Pflanzen ermittelt.

Wirkstoff-Präparate, Aufwandmengen und Versuchsergebnisse gehen aus der folgenden Tabelle hervor.

Tabelle F

Düngungsversuch / Gewächshaus

| Präparat | mg N pro Gefäß | Durchschnittliche Wuchshöhe pro Pflanze in Cm nach | | | Durchschnittliches Frischsubstanzgewicht pro Pflanze in g nach 4 Monaten |
|---|---|---|---|---|---|
| | | 7 Wochen | 10 Wochen | 3 Monaten | |
| Ohne Präparat (3 Kontrollen) | 0 | 15,3 | 18,5 | 24,3 | 11,0 |
| D | 150 | 25,0 | 32,0 | 47,0 | 17,5 |
| | 375 | 22,5 | 33,5 | 53,0 | 18,3 |
| | 750 | 22,0 | 30,0 | 53,5 | 16,8 |
| G | 150 | 23,3 | 32,5 | 47,8 | 19,3 |
| | 375 | 24,0 | 32,8 | 53,3 | 19,0 |
| | 750 | 17,3 | 26,0 | 45,5 | 12,0 |
| E | 150 | 24,0 | 30,8 | 48,2 | 17,0 |
| | 375 | 24,0 | 34,5 | 57,2 | 21,8 |
| | 750 | 17,3 | 23,8 | 46,0 | 15,5 |
| F | 150 | 24,3 | 31,8 | 49,3 | 17,5 |
| | 375 | 25,3 | 35,5 | 58,8 | 22,8 |
| | 750 | 15,3 | 23,3 | 47,0 | 18,0 |

## Beispiel G

### Düngungsversuch/Gewächshaus

Versuchspflanze: Deutsches Weidelgras (Lolium perenne), 1,8 g pro Gefäß
Bodenart: neutraler sandiger Lehmboden mit Zumischung von 30 Vol.-% Düngetorf.
Gefäß: Plastikeimer, 5 kg Boden pro Gefäß.
Bodenfeuchte bei Kultur: etwa 70% der maximalen Wasserkapazität bei 20° C.

Jedes Gefäß wird zunächst mit einer Basisdüngung versetzt, und zwar werden pro Gefäß hinzugegeben:

0,9 g Phosphorpentoxid in Form von Thomasphosphat
1,5 g Kaliumoxid in Form von Kalimagnesia.

Danach wird das Versuchspräparat in der jeweils gewünschten Menge auf die Bodenoberfläche gegeben. In verschiedenen Zeitabständen wird ausgewertet. Dabei wird jeweils das durchschnittliche Frischgewicht eines jeden Grasschnittes ermittelt.
Wirkstoff-Präparate, Aufwandmengen und Versuchsergebnisse gehen aus der folgenden Tabelle hervor.

Tabelle G

Düngungsversuch / Gewächshaus

| Präparat | g N pro Gefäß | Durchschnittliches Frischgewicht pro Gefäß in g nach | | | | | | |
|---|---|---|---|---|---|---|---|---|
| | | 1. Schnitt 3 Wochen | 2. Schnitt 2 Monate | 3. Schnitt 4 Monate | 4. Schnitt 6 Monate | 5. Schnitt 7 Monate | 6. Schnitt 8 Monate | Summe aller Schnitte |
| Ohne Präparate (= Kontrolle) | 0 | 2,5 | 7,0 | 5,3 | 2,0 | 1,4 | 1,1 | 41,8 |
| G | 1 | 42,4 | 32,5 | 9,1 | 16,9 | 18,9 | 5,1 | 124,9 |
| | 1,5 | 44,4 | 28,8 | 10,7 | 14,3 | 23,4 | 22,4 | 144,0 |
| E | 1 | 40,1 | 25,9 | 8,8 | 10,9 | 8,9 | 3,4 | 98,0 |
| | 1,5 | 42,7 | 25,4 | 10,2 | 4,4 | 16,2 | 12,8 | 111,7 |

## Herstellungsbeispiele

### I) Herstellung bekannter Azulminsäuren

#### Beispiel 1

**Vergleichsversuch**
**Polymerisation monomerer Blausäure in Gegenwart von Kaliumcyanat**
**(vgl. Angew. Chem. 72 (1960), Seite 380, Beispiel 4)**

200 Gewichtsteile einer 30%igen wäßrigen Blausäure-Lösung werden in Gegenwart von 1,08 Gewichtsteilen Kaliumcyanat 5 Stunden auf 40 bis 50°C erwärmt. Das gebildete Produkt wird abfiltriert, nacheinander mit destilliertem Wasser und Äthanol gewaschen und anschließend bei 80°C getrocknet. Man erhält Azulminsäure in Form eines schwarzen Pulvers in einer Ausbeute von 95% der Theorie.

Elementaranalyse:
41,4% C; 4,0% H; 43,2% N; 11,4% O

Aufgrund der angeführten Sauerstoffwerte kommt dieser Azulminsäure, deren Konstitution in etwa durch die in dieser Anmeldung angegebene Formel (I) charakterisiert wird, die Summenformel $C_{24}H_{28}O_5N_{22}$ zu (vgl. Angew. Chem. 72 (1960) Seite 383).

Dieses Polymerisat spaltet, auch nach sorgfältiger Langzeit-Trocknung bei Raumtemperatur oder bei 80°C, fortlaufend kleine Mengen an monomerer Blausäure ab. Nachträgliches intensives Waschen und erneutes Trocknen selbst im Hochvakuum bringt die Blausäurerückspaltung nicht zum Stillstand. Die Cyanwasserstoff-Bestimmung erfolgt nach üblichen Methoden.

Lagert man 2000 g der Azulminsäure, die nach der oben angegebenen Methode hergestellt wurde, bei 50°C in einem Behälter mit einem Luftvolumen von 12 Litern, so wird nach 2 Stunden eine Cyanwasserstoff-Konzentration von 0,066 g Cyanwasserstoff pro 12 Liter Luft gemessen. Danach errechnet sich ein Cyanwasserstoff-MAK-Wert (MAK = maximale Arbeitsplatz-Konzentration) von

4583 ppm, also ein MAK-Wert, der 416mal größer ist als der gesetzlich festgelegte MAK-Wert von 11 ppm. Demnach ist eine derartige Azulminsäure für eine praktische Anwendung völlig unbrauchbar.

Behandelt man 10 Gewichtsteile der nach dem obigen Verfahren hergestellten Azulminsäure 3 Stunden lang bei 100° C mit 100 Gewichtsteilen destilliertem Wasser und bestimmt dann im Filtrat die Cyanidionenkonzentration, so findet man eine Cyanidionenkonzentration, die einem Blausäure-Gehalt von 26 bis über 28 mg pro Liter Wasser entspricht. Derartige Cyanidionenkonzentrationen bewirken bereits Abtötungen und Desaktivierungen wichtiger im Boden vorkommender Bakterien und ihrer Enzymsysteme.

## Beispiel 2

### Vergleichsversuch
### Polymerisation monomerer Blausäure nach dem »Zulaufverfahren« in Gegenwart von Ammoniak (vgl. DE-B 949 060)

Ein Gemisch aus 5600 g Wasser, 1400 g Blausäure und 88 g Ammoniak wird genau nach den im Beispiel 1 der DE-B 949 060 enthaltenen Angaben polymerisiert. Nach etwa fünfstündiger Polymerisationszeit bei 50° C steigt die Innentemperatur nach dem Abstellen der Kühlung auf 90° C, hält sich für etwa eine Stunde auf dieser Höhe und fällt dann ab. Die entstandene Azulminsäure wird isoliert, mit Wasser gewaschen und bei 80° C getrocknet. Ausbeute 98% der Theorie.

Thermische Stabilität:

Zweistündige Lagerung von 2000 g der Azulminsäure bei 50° C (vgl. Beispiel 1): MAK-Wert über 5000 ppm.

Hydrolytische Stabilität:

Dreistündige Behandlung von 10 Gewichtsteilen der Azulminsäure mit 100 Gewichtsteilen destilliertem Wasser bei 100° C (vgl. Beispiel 1): Blausäurekonzentration von 30 bis 36 mg pro Liter Wasser.

## Beispiel 3

### Vergleichsversuch
### Behandlung von Azulminsäure gemäß Beispiel 1 mit Ketonen in Abwesenheit von Wasser

Jeweils 108 g der gemäß Beispiel 1 hergestellten Azulminsäure (von den Endgruppen abgesehen entspricht diese Menge im Mittel 2 Grundmol an polymerisierten Aminocyancarben-Einheiten der Struktur

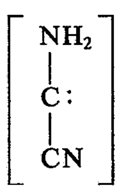

Äquivalentgewicht = 54

werden je 30 Stunden lang bei 120° C mit 4 Mol eines der nachfolgend genannten wasserfreien Ketone sowie mit 4 Mol Xylol, das als Schleppmittel für Wasser fungiert, behandelt:

a) Cyclohexanon
b) Methyläthylketon
c) Diäthylketon
d) Methylisobutylketon

Neben geringfügiger Blausäureabspaltung (etwa 0,5 Gewichtsprozent) findet in allen Fällen keine mit einer Wasserabspaltung verbundene Polyketimin-Bildung zwischen den Ketonen und den Aminogruppen der Azulminsäure satt. Kleine Mengen an Blausäure werden als Cyanhydrine abgefangen. Nach beendeter Behandlung isoliert man jeweils etwa 107 g an Azulminsäure, die gemäß Elementaranalyse eine praktisch unveränderte Zusammensetzung aufweist. Diese mit Ketonen behandelten Azulminsäure-Produkte sind nicht stabilisiert, sondern spalten bei Raumtemperatur wie auch bei 50° C nach wie vor kleine Mengen an Blausäure ab. Auch stundenlanges Kochen der Azulminsäure mit Aceton unter fortlaufender Entfernung des Acetons führt nicht zu Polyketiminen oder zu substituierten Aminalgruppen enthaltenden vernetzten Kondensationsprodukten.

II) Herstellung erfindungsgemäß verwendbarer Azulminsäuren

Beispiel 4

108 g (= 2 Grundmol) der nach der im Beispiel 1 beschriebenen Methode hergestellten Azulminsäure werden in 1000 g (= 10 Mol) 30%ige wäßrige Formalin-Lösung eingerührt und 8 Stunden bei 100°C gehalten. Obwohl die Azulminsäure im Reaktionsmedium vollständig unlöslich ist, wird bei der Filtration von filtrierten Proben, die im Abstand von jeweils einer Stunde dem Reaktionsmedium entnommen werden, eine laufende Formaldehydabnahme festgestellt. Insgesamt werden etwa 1,8 Mol an Formaldehyd auf 2 Grundmol an Aminocyancarben-Einheiten verbraucht. Pro Mol Amino-Gruppen entspricht dies einer Menge von etwa 0,9 Mol Formaldehyd, was bedeutet, daß trotz topochemischer, heterogener Reaktion nahezu jede Aminogruppe in der Azulminsäure zur Reaktion gelangt. Die Aufarbeitung erfolgt in der Weise, daß man das Reaktionsprodukt abfiltriert, mit Wasser wäscht und anschließend mit Methanol von Feuchtigkeit und Spuren an Formaldehyd befreit.

Elementaranalyse:
44,1% C; 4,4% H; 30,5% N; 21,4% O

Das Reaktionsprodukt ist gegenüber einer thermischen Abspaltung von Cyanwasserstoff extrem stabil. Wie Cyanwasserstoff-Bestimmungen zeigen, spaltet es weder bei Raumtemperatur noch bei 50°C auch nur Spuren von Cyanwasserstoff ab. Selbst bei 160°C ist Blausäure nicht nachweisbar.
Der im Beispiel 1 beschriebene Hydrolysetest fällt hier ebenfalls negativ aus.
Auch in der Mutterlauge des Reaktionsproduktes ist weder monomere Blausäure selbst noch deren Umsetzungsprodukt mit Formaldehyd, — also Hydroxyacetonitril —, nachweisbar.
Bei 100°C weist die mit Formaldehyd stabilisierte Azulminsäure unter den verschiedensten Bedingungen jeweils einen Cyanwasserstoff-Abspaltungswert von 0 ppm auf.

Beispiel 5

108 g (= 2 Grundmol) der gemäß Beispiel 1 hergestellten Azulminsäure werden in eine Mischung aus 970 ml Wasser und 25 g einer 30%igen Formalin-Lösung (= 0,25 Mol Formaldehyd) eingerührt und 8 Stunden bei 100°C gehalten. Obwohl hierbei nur eine partielle Umsetzung (Aminalbildung, Methylolierung und Vernetzungsreaktion) der Aminogruppen der Azulminsäure mit Formaldehyd erfolgt, wird nach beendeter Reaktion ein Festprodukt isoliert, das bei Raumtemperatur gegenüber Cyanwasserstoff-Rückspaltung völlig beständig ist. Auch bei 50°C läßt sich kein Cyanwasserstoff nachweisen. Somit resultiert für das Reaktionsprodukt ein MAK-Wert von Null.

Beispiel 6

Jeweils 100 g der gemäß Beispiel 4 bis 5 hergestellten stabilisierten Azulminsäuren werden bei Raumtemperatur 2 Stunden lang mit

a) 0,33 Mol Phosphorsäure
b) 0,48 Mol Salpetersäure

gerührt. Anschließend arbeitet man auf, indem man das jeweils vorhandene schwarze Festprodukt abfiltriert und trocknet. Man erhält auf diese Weise Phosphorsäure- bzw. Salpetersäure-Additions-Salze der eingesetzten, mit Formaldehyd stabilisierten Azulminsäure, also Verbindungen, in denen die jeweilige Säure über die noch freien Aminogruppen (= Ankergruppen) der stabilisierten Azulminsäuren an die polymere Matrix gebunden ist.

Beispiel 7

a) 108 g (2 Grundmol) einer gemäß Beispiel 2 hergestellten Azulminsäure werden nach vorherigem Trocknen bei 80°C in einer verschlossenen Rührapparatur mit 1000 g destilliertem Wasser und 98 g (1 Mol) Phosphorsäure versetzt und auf 100°C erhitzt. Man hält das Reaktionsgemisch 16 Stunden bei dieser Temperatur und leitet während dieser Zeit einen als Treibgas dienenden Stickstoffstrom mit einer Geschwindigkeit von etwa 50 ml pro Minute durch das Reaktionsgemisch. Der austretende Stickstoffstrom wird durch zwei nacheinandergeschaltete Waschflaschen geleitet, wobei die erste zur Bindung des im Stickstoffstrom enthaltenen Ammoniaks mit 200 ml 1 n wäßriger Salzsäure gefüllt ist, und die zweite Waschflasche zur Bindung des im Stickstoffstrom vorhandenen Kohlendioxids mit 200 ml 1 n wäßriger Natronlauge beschickt ist. Im Abstand von 1 bis 3 Stunden werden die aus der

Azulminsäure entbundenen Mengen an Ammoniak und Kohlendioxid titrimetrisch bestimmt. Nach 16stündiger Reaktionsdauer beträgt die Gesamtmenge an Ammoniak, die durch hydrolytische Erzeugung von $F_1$-Fehlerstellen (R = H, Äquivalentgewicht 73) entstanden ist, 6,4 g ($\approx$0,38 Mol). Die Gesamtmenge an Kohlendioxid, die durch Decarboxylierung von $F_1$-Fehlerstellen zu $F_2$-Fehlerstellen (Äquivalentgewicht 29) entstanden ist, beträgt 4,3 g ($\approx$0,1 Mol) (nach der Bariumcarbonat-Methode titrimetrisch ermittelt). Aus diesen Zahlen errechnet sich ein molarer $NH_3/CO_2$-Quotient von aufgerundet etwa 3,8. Dieser Zahlenwert besagt, daß von etwa 4 durch Entcyclisierung und Verseifung von Nitrilgruppen der Azulminsäure erzeugten Carboxylgruppen ($F_1$-Fehlerstellen) etwa eine decarboxyliert wird und damit zu einer $F_2$-Fehlerstelle führt.

Die Aufarbeitung geschieht in der Weise, daß man das feste Reaktionsprodukt abfiltriert, wäscht und trocknet. Man erhält 109 g einer $F_1$- und $F_2$-Fehlerstellen enthaltenden (modifizierten) Azulminsäure.

Aufgrund dieser Ausbeuteangabe und des ermittelten molaren $NH_3/CO_2$-Quotienten von 3,8 sowie aufgrund der Tatsache, daß die $F_2$-Fehlerstellen aus den $F_1$-Fehlerstellen entstanden sind (0,38 Mol − 0,1 Mol = 0,28 Mol), läßt sich errechnen, daß 100 Gewichtsteile des Verfahrensproduktes etwa 18,6 Gewichtsprozent an $F_1$-Fehlerstellen und etwa 2,67 Gewichtsprozent an $F_2$-Fehlerstellen enthalten. Die Summe an $F_1$- und $F_2$-Fehlerstellen beträgt 21,3 Gewichtsprozent.

Wie sich aus der Elementaranalyse ergibt, enthält die modifizierte Azulminsäure etwa 9,3 Gewichtsprozent an Phosphorsäure. Diese Phosphorsäure ist über die freien Amino-Gruppen (Ankergruppen) der modifizierten Azulminsäure an die polymere Matrix gebunden.

b) Ein Gemisch aus 100 g der nach der unter (a) beschriebenen Methode hergestellten modifizierten Azulminsäure, 2 Mol Formaldehyd und 600 ml Wasser wird 6 Stunden auf 100°C erhitzt. Danach arbeitet man auf, indem man das feste Produkt abfiltriert, wäscht und trocknet. Man gewinnt auf diese Weise 118 g einer $F_1$- und $F_2$-Fehlerstellen enthaltenden, mit Formaldehyd stabilisierten Azulminsäure, die gegenüber thermischer und hydrolytischer Cyanwasserstoff-Abspaltung extrem stabil ist. Der Cyanwasserstoff-Abspaltungswert beträgt auch dann, wenn er unter sehr ungünstigen Bedingungen (kleines Luftvolumen) gemessen wird, praktisch 0 ppm.

Wie durch eine $NH_2$-Gruppen-Bestimmung nach van Slyke (vgl. Angew. Chem. 72 (1960), Seite 382) ermittelt wurde, enthält die bei der obigen Umsetzung als Ausgangsprodukt verwendete modifizierte Azulminsäure pro 100 Gewichtsteile etwa 21 Gewichtsprozent an reaktiven $NH_2$-Gruppen (= etwa 1,25 $NH_2$-Äquivalente). Demnach sollten bei der Azomethinbildung ($-N=CH_2$) und Vernetzung der Azomethingruppen durch Polymerisation etwa 37,5 Gewichtsteile Formaldehyd (= etwa 1,25 Äquivalente) verbraucht werden. Die analytische Formaldehyd-Bilanzierung nach Peroxidmethode von Blank und Finkenbeiner (vgl. Gattermann »Die Praxis des organischen Chemikers«, De Gruyter & Co., Berlin 1962, Seite 180 sowie Berichte 31, 2979 (1898)) zeigt jedoch, daß nur etwa 0,8 Mol an Formaldehyd reagiert haben. Es liegen also in der gemäß obigem Verfahren aus einer modifizierten Azulminsäure und Formaldehyd hergestellten stabilisierten Azulminsäure entweder noch 0,45 Äquivalente an freien Aminogruppen vor, oder diese 0,45 Aminogruppen-Äquivalente haben nach folgendem Formelschema inter- oder intramolekular unter Aminalbildung reagiert.

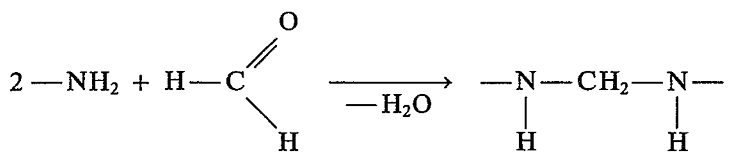


Im letzteren Falle wäre eine quantitative Kondensation aller Aminogruppen erreicht worden. Nach dem gegenwärtigen Stand der analytischen Methoden kann nicht entschieden werden, welcher Anteil an Aminogruppen mit Formaldehyd im Äquivalenzverhältnis 1 : 1 reagiert hat und welcher Anteil an Aminogruppen mit Formaldehyd im Äquivalenzverhältnis 2 : 1 umgesetzt wurde.

## Beispiel 8

Jeweils 100 g einer gemäß Beispiel 7b hergestellten, mit Formaldehyd stabilisierten Azulminsäure werden in 250 g Wasser dispergiert und bei Raumtemperatur 2 Stunden lang mit

a) 10,78 g (= 0,11 Mol) Phosphorsäure
b) 30,2 g (= 0,48 Mol) Salpetersäure

gerührt. Man erhält auf diese Weise Phosphorsäure- bzw. Salptersäure-Salze der eingesetzten, mit Formaldehyd stabilisierten Azulminsäure. Die anorganischen Säuren sind hierbei über die noch freien Aminogruppen und/oder über Aminalgruppen der Konstitution

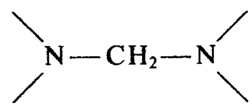

an der polymeren Matrix fixiert.

Beispiel 9

a) 108 g (2 Grundmol) einer gemäß Beispiel 2 hergestellten Azulminsäure werden nach vorherigem Trocknen bei 80° C in einer verschlossenen Rührapparatur mit 1000 g destilliertem Wasser und 0,5 Mol Calciumsulfit-dihydrat versetzt und auf 100° C erhitzt. Man hält das Reaktionsgemisch 8 Stunden auf dieser Temperatur und leitet während dieser Zeit einen Stickstoffstrom mit einer Geschwindigkeit von etwa 50 ml pro Minute durch. In dem austretenden Stickstoffstrom wird der Gehalt an Ammoniak und Kohlendioxid in der im Beispiel 7 angegebenen Weise bestimmt. Es wird eine modifizierte Azulminsäure erhalten, deren molarer $NH_3/Co_2$-Quotient 2,68 ist.

b) Ein Gemisch aus 100 g der nach der unter (a) beschriebenen Methode hergestellten modifizierten Azulminsäure, 20 g einer 30%igen wäßrigen Formalin-Lösung (= 0,2 Mol Formaldehyd) und 400 g Wasser wird 8 Stunden auf 100° C erhitzt. Danach arbeitet man auf, indem man das feste Produkt abfiltriert, wäscht und trocknet. Man gewinnt auf diese Weise eine $F_1$- und $F_2$-Fehlerstellen enthaltende, mit Formaldehyd stabilisierte Azulminsäure, die nach vorherigem Trocknen bei 30—50° C bei der anschließenden Lagerung bei Raumtemperatur keinen Cyanwasserstoff abspaltet. Das Reaktionsprodukt ist in 1 n wäßriger Natronlauge löslich.

Beispiel 10

Jeweils 100 g der gemäß Beispiel 9b hergestellten stabilisierten Azulminsäure werden bei Raumtemperatur 2 Stunden lang mit

a) einem Überschuß 1 molarer Phosphorsäure
b) einem Überschuß 1 molarer Salpetersäure

gerührt. Danach wird das Festprodukt abfiltriert und getrocknet. Man erhält auf diese Weise Phosphorsäure- bzw. Salpetersäure-Salze der eingesetzten, mit Formaldehyd stabilisierten Azulminsäure, wobei an 100 Gewichtsteile an stabiler Azulminsäure 0,12 Mol Phosphorsäure bzw. 0,51 Mol Salpetersäure gebunden sind.

Beispiel 11

a) 108 g (2 Grundmol) einer gemäß Beispiel 2 hergestellten Azulminsäure werden nach vorherigem Trocknen bei 80°C in einer verschlossenen Rührapparatur mit 1000 g entionisiertem Wasser versetzt und auf 100° C erhitzt. Man hält das Reaktionsgemisch, in dem der pH-Wert 6,2 beträgt, 8 Stunden lang auf dieser Temperatur und leitet während dieser Zeit einen Stickstoffstrom mit einer Geschwindigkeit von 50 ml pro Minute durch. In dem austretenden Stickstoffstrom wird der Gehalt an Ammoniak und Kohlendioxid in der im Beispiel 7 angegebenen Weise bestimmt. Die Gesamtmenge an entbundenem Ammoniak beträgt 0,059 Mol.

Die Gesamtmenge an entbundenem Kohlendioxid beträgt 0,023 Mol.

Daraus ergibt sich ein molarer $NH_3/CO_2$-Quotient von 2,57.

Aus den entbundenen Mengen an Ammoniak und Kohlendioxid errechnet sich durch Differenzbildung (0,059 – 0,023 = 0,036), daß etwa 0,036 Äquivalente an $F_1$-Fehlerstellen und etwa 0,023 Äquivalente an $F_2$-Fehlerstellen entstanden sind.

Ausbeute an modifizierter Azulminsäure: 107 g

Aus dieser Ausbeuteangabe, dem molaren $NH_3/CO_2$-Quotienten und der Differenz der entbundenen Molmengen an Ammoniak und Kohlendioxid (0,059 – 0,023 = 0,036) errechnet sich, daß 100 Gewichtsteile des Verfahrensproduktes etwa 2,57 Gewichtsprozent an $F_1$-Fehlerstellen und etwa 0,7 Gewichtsprozent an $F_2$-Fehlerstellen enthalten.

b) Ein Gemisch aus 100 g der nach der unter (a) beschriebenen Methode hergestellten modifizierten Azulminsäure, 20 g einer 30%igen wäßrigen Formalin-Lösung (= 0,2 Mol Formaldehyd) und 400 g Wasser wird 8 Stunden auf 100° C erhitzt. Danach arbeitet man auf, indem man das feste Produkt abfiltriert, wäscht und trocknet. Man gewinnt auf diese Weise eine $F_1$- und $F_2$-Fehlerstellen

enthaltende, mit Formaldehyd stabilisierte Azulminsäure, die nach vorherigem Trocknen bei 30—50° C bei der anschließenden Lagerung bei Raumtemperatur keinen Cyanwasserstoff abspaltet. Das Reaktionsprodukt ist in 1 n wäßriger Natronlauge löslich.

Beispiel 12

Jeweils 100 g der gemäß Beispiel 11b hergestellten stabilisierten Azulminsäure werden bei Raumtemperatur 2 Stunden lang mit

a) einem Überschuß 1 molarer Phosphorsäure
b) einem Überschuß 1 molarer Salpetersäure

gerührt. Danach wird das Festprodukt abfiltriert und getrocknet. Man erhält auf diese Weise Phosphorsäure- bzw. Salpetersäure-Salze der eingesetzten, mit Formaldehyd stabilisierten Azulminsäure, wobei an 100 Gewichtsteile an stabilisierter Azulminsäure 0,16 Mol Phosphorsäure bzw. 0,54 Mol Salpetersäure gebunden sind.

Beispiel 13

a) Zu 7 Litern 20%iger wäßriger Blausäure (= 1400 g (52 Mol) Cyanwasserstoff) werden unter intensivem Rühren 350 g etwa 25gewichtsprozentiger wäßriger Ammoniak-Lösung (= 87,5 g (etwa 5,15 Mol) Ammoniak) zugegeben, die 70 g (1,1 Mol) Natriumcyanat enthält. Diese Mischung wird auf 40° C erwärmt. Danach steigt die Temperatur durch die freiwerdende Polymerisationswärme auf 70° C an. Man erhitzt noch 4 Stunden auf 90° C und arbeitet dann auf, indem man das braunschwarz anfallende Polymerisat, das in Wasser keine kolloiden Lösungen bildet, abfiltriert, nacheinander mit Wasser und Äthanol wäscht und anschließend bei 50—80° C unter vermindertem Druck trocknet.

Ausbeute: 94,9% der Theorie.

Elementaranalyse:
40,6% C; 4,1% H; 42,4% N; 12,8% O

In der Mutterlauge des Polymerisationsansatzes wird Carbonat in einer solchen Konzentration nachgewiesen, wie sie einer entbundenen Kohlendioxid-Menge von etwa 0,02 Mol pro 100 g Polymerisat entspricht. Demnach sind bei der Herstellung des Polymerisats bereits 0,56 Gewichtsprozent an $F_2$-Fehlerstellen in das Produkt eingeführt worden. Ferner ergibt sich unter Zugrundelegung eines molaren $NH_3/CO_2$-Quotienten von etwa 4, wie er in einem Parallelversuch bei der zweistündigen Hydrolyse einer natriumcyanatfreien Azulminsäure bei 90° C gefunden wurde, daß pro 100 g des hergestellten Polymerisats eine Menge von 0,08 Mol Ammoniak entbunden wurde, was einem $F_1$-Fehlerstellengehalt von 4 Gewichtsprozent entspricht.
Somit handelt es sich bei dem nach dem obigen Verfahren hergestellten Polymerisat um eine $F_1$- und $F_2$-Fehlerstellen enthaltende Azulminsäure, also um eine modifizierte Azulminsäure.
b) Bei der Umsetzung von 100 g der nach der unter (a) beschriebenen Methode hergestellten modifizierten Azulminsäure mit 0,2 Mol Formaldehyd unter den in Beispiel 7b angegebenen Bedingungen entsteht eine Fehlerstellen enthaltende, mit Formaldehyd stabilisierte Azulminsäure, die bei Raumtemperatur keinen Cyanwasserstoff abspaltet.

Beispiel 14

Bei der Umsetzung von 100 g der gemäß Beispiel 13a hergestellten modifizierten Azulminsäure mit 0,2 Mol Glyoxal unter den in Beispiel 7b angegebenen Bedingungen entsteht eine Fehlerstellen enthaltende, mit Glyoxal stabilisierte Azulminsäure, die bei Raumtemperatur keinen Cyanwasserstoff abspaltet.

Beispiel 15

108 g der gemäß Beispiel 13a hergestellten modifizierten Azulminsäure werden in 1000 g (= 10 Mol) 30%ige wäßrige Formalin-Lösung eingerührt und 8 Stunden bei 100° C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 150 g stabilisierte Azulminsäure, die selbst bei 180° C keinen Cyanwasserstoff abspaltet.

## Beispiel 16

a) 4 Liter 20%ige wäßrige Blausäure, 200 ml etwa 25%ige wäßrige Ammoniak-Lösung und 40 g Natriumcyanat werden zusammengerührt. Dieses Reaktionsgemisch wird im Verlauf von 2 Stunden auf 90° C aufgeheizt. Danach rührt man unter Ausnutzung des Blausäure-Rückflusses bei Verwendung eines gut wirksamen Rückflußkühlers weitere 30 Minuten bei 90° C, destilliert dann 500 ml Wasser und eine geringe Menge an Blausäure ab und fügt erneut 500 ml Wasser hinzu. Anschließend wird 5 Stunden bei 100° C gerührt. Das dabei anfallende, ausgezeichnet filtrierbare schwarze Verfahrensprodukt wird abgesaugt, nacheinander mit etwa 4 Litern Wasser und mit Methanol gewaschen und unter vermindertem Druck getrocknet.

Ausbeute: 845 g an $F_1$- und $F_2$-Fehlerstellen enthaltender Azulminsäure.
Fehlerstellengehalt: etwa 11 Gewichtsprozent.

Elementaranalyse:
38,2% C; 4,9% H; 38,8% N; 18,9% O

Wie aus diesen Werten zu entnehmen ist, besitzt das Produkt einen höheren Sauerstoffgehalt und einen niedrigeren Stickstoffgehalt als die gemäß Beispiel 1 hergestellte Azulminsäure. Dies zeigt an, daß in dem erfindungsgemäßen Produkt ein großer Teil an Fehlerstellen ($F_1$ und $F_2$) enthalten ist.

b) 108 g der nach der unter (a) beschriebenen Methode hergestellten modifizierten Azulminsäure werden in 1000 g (= 10 Mol) 30%ige wäßrige Formalin-Lösung eingerührt und 8 Stunden bei 100° C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 140 g stabilisierte Azulminsäure, die selbst bei 200° C keinen Cyanwasserstoff abspaltet.

Elementaranalyse:
45,1% C; 5,1% H; 31,3% N; 18,6% O

## Beispiel 17

a) Bei der Durchführung der im Beispiel 16a beschriebenen Blausäurepolymerisation mit Hilfe von wäßriger Ammoniak-Lösung und Natriumcyanat als Katalysator unter den in Beispiel 1 angegebenen Bedingungen bei 40° C wird eine Azulminsäure erhalten, die praktisch frei von Fehlerstellen und daher relativ sauerstoffarm ist.

Elementaranalyse:
41,6% C; 3,9% H; 45,8% N; 7,5% O

b) 108 g der nach der unter (a) beschriebenen Methode hergestellten Azulminsäure werden in 1000 g (= 10 Mol) 30%ige wäßrige Formalin-Lösung eingerührt und 8 Stunden bei 100° C gehalten. Danach wird aufgearbeitet, indem man das Reaktionsprodukt abfiltriert, mit Wasser wäscht und anschließend mit Methanol von Feuchtigkeit und Spuren an Formaldehyd befreit. Man erhält 145 g stabilisierte Azulminsäure, die selbst bei 200° C keinen Cyanwasserstoff abspaltet.

Elementaranalyse:
45,9% C; 4,9% H; 32,6% N; 16,8% O

Wie aus diesen Werten hervorgeht, enthält auch diese stabilisierte Azulminsäure Fehlerstellen. Letztere sind also im Verlauf der Umsetzung der als Ausgangsprodukt verwendeten, praktisch fehlerstellenfreien Azulminsäure mit Formaldehyd eingeführt worden.

## Beispiel 18

Ein Gemisch aus 108 g der gemäß Beispiel 16a hergestellten modifizierten Azulminsäure (Fehlerstellengehalt etwa 11 Gewichtsprozent), 0,5 Mol Imidazol und 800 ml Wasser wird 20 Stunden auf 100° C erwärmt. Danach wird aufgearbeitet, indem man das Festprodukt abfiltriert, wäscht und trocknet. Man erhält eine modifizierte Azulminsäure, die aufgrund der ermittelten Ammoniak-Kohlendioxid-Abspaltungs-Bilanz etwa 30 Gewichtsprozent an $F_1$-Fehlerstellen aufweist.

Bei der Umsetzung dieser stark Fehlerstellen enthaltenden Azulminsäure mit Formaldehyd unter den im Beispiel 4 angegebenen Bedingungen wird eine stabilisierte Azulminsäure erhalten, die auch bei längerer Lagerung bei 50° C keinen Cyanwasserstoff abspaltet.

## Beispiel 19

a) Ein Gemisch aus 200 g der gemäß Beispiel 13a hergestellten, relativ fehlerstellenarmen Azulminsäure (Zusammensetzung 40,6% C; 4,1% H; 42,4% N; 12,8% O) und 800 g einer 25%igen wäßrigen Ammoniak-Lösung wird 8 Stunden bei 25—31°C gerührt. Anschließend wird das schwarze Pulver abgesaugt, mit 5 Litern Wasser gewaschen und bei Raumtemperatur im Vakuum-Trockenschrank getrocknet.

Ausbeute: 215 g einer modifizierten Azulminsäure, die etwa 6—7 Gewichtsprozent an $F_1$-Fehlerstellen gebundenes Ammoniak enthält. Derartige abgewandelte $F_1$-Fehlerstellen lassen sich formelmäßig wie folgt veranschaulichen:

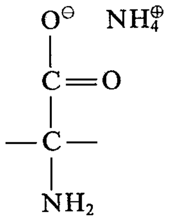

Elementaranalyse:
37,6% C; 4,8% H; 38,5% N; 19,4% O

Trocknet man das Verfahrensprodukt nicht bei Raumtemperatur, sondern bei höheren Temperaturen, so wird leicht Ammoniak abgespalten.

b) Durch Umsetzung von 100 g der nach der unter (a) beschriebenen Methode hergestellten, ammoniakhaltigen modifizierten Azulminsäure mit 0,2 Mol Formaldehyd bei 50°C in wäßriger Lösung wird ein Produkt erhalten, das bei Temperaturen bis zu 30°C nicht zur Cyanwasserstoff-Abspaltung neigt.

Über einen Teil dieses Verfahrensproduktes wird bei 50°C vier Stunden lang ein Stickstoffstrom mit einer Strömungsgeschwindigkeit von 100 ml Stickstoff pro Minute geleitet. In dem aufgefangenen Gas läßt sich analytisch kein Cyanwasserstoff nachweisen.

Das Verfahrensprodukt spaltet sowohl hydrolytisch als auch thermisch leicht Ammoniak ab. So wird bei 50°C in einer Stunde bereits ein Anteil von 1,43 Gewichtsprozent an Ammoniak in Freiheit gesetzt.

Begast man das Verfahrensprodukt, das schwach nach Ammoniak riecht, in feuchtem Zustand mit Kohlendioxid, so erhält man ein praktisch geruchsloses Pulver.

c) Ein Teil des gemäß b) hergestellten Verfahrensproduktes wird gut mit Wasser gewaschen und zur erneuten Fehlerstellenerzeugung noch einmal mit 25%iger wäßriger Ammoniak-Lösung behandelt. Das dabei entstehende Produkt zeigt selbst bei 50°C keine Tendenz zur Cyanwasserstoff-Abspaltung.

## Beispiel 20

a) Ein Gemisch aus 200 g der gemäß Beispiel 13a hergestellten, relativ fehlerstellenarmen Azulminsäure und 800 g einer 25%igen wäßrigen Ammoniak-Lösung wird 3 Stunden in einer geschlossenen Apparatur bei 80°C gerührt. Anschließend wird das schwarze Pulver abgesaugt, mit 5 Litern Wasser gewaschen und bei Raumtemperatur im Vakuumtrockenschrank getrocknet. Man erhält eine modifizierte Azulminsäure, die etwa 13 Gewichtsprozent an $F_1$-Fehlerstellen gebundenes Ammoniak enthält.

b) Durch Umsetzung von 100 g der nach der unter (a) beschriebenen Methode hergestellten, ammoniakhaltigen modifizierten Azulminsäure mit 0,2 Mol Formaldehyd bei 50°C in wäßriger Lösung wird ein Produkt erhalten, das bei Temperaturen bis zu 60°C nicht zur Cyanwasserstoff-Abspaltung neigt.

Das Verfahrensprodukt spaltet sowohl hydrolytisch als auch thermisch leicht Ammoniak ab.

c) Ein Teil des gemäß (b) hergestellten Verfahrensproduktes wird gut mit Wasser gewaschen und zur erneuten Fehlerstellenerzeugung noch einmal mit 25%iger wäßriger Ammoniak-Lösung behandelt. Das dabei entstehende Produkt zeigt selbst bei 70°C keine Tendenz zur Cyanwasserstoff-Abspaltung.

## Beispiel 21

a) Ein Gemisch aus 108 g der gemäß Beispiel 13a hergestellten Azulminsäure, 14 g Calciumthiosulfat-Hexahydrat und 800 ml Wasser wird 1,6 Stunden auf 100°C erwärmt. Danach wird aufgearbeitet, indem man das Festprodukt abfiltriert, wäscht und trocknet. Man erhält eine modifizierte Azulminsäure, die aufgrund der entbundenen Mengen an Ammoniak und Kohlendioxid

etwa 3,3 Gewichtsprozent an zusätzlich entstandenen $F_1$-Fehlerstellen und etwa 1,4 Gewichtsprozent an zusätzlich entstandenen $F_2$-Fehlerstellen aufweist.

b) Durch Umsetzung von 100 g der gemäß (a) hergestellten modifizierten Azulminsäure mit 0,2 Mol Formaldehyd bei 50° C in wäßriger Lösung wird ein Produkt erhalten, das auch bei einer Lagerung von mehreren Monaten bei 30° C keinen Cyanwasserstoff abspaltet. Im Luftvolumen eines Gefäßes, das zur Hälfte mit dem Verfahrensprodukt gefüllt ist, wird eine Cyanwasserstoff-Konzentration von 0 ppm gemessen.

## Beispiel 22

a) Ein Gemisch aus 108 g der gemäß Beispiel 13a hergestellten modifizierten Azulminsäure, 19 g Calcium-dihydrogensulfid-Hexahydrat und 800 ml Wasser wird 2 Stunden auf 100° C erwärmt. Danach wird aufgearbeitet, indem man das Festprodukt abfiltriert, wäscht und trocknet. Man erhält eine modifizierte Azulminsäure, die etwa 2 Gewichtsprozent an Calcium und, — wie sich aus den entbundenen Mengen an Ammoniak und Kohlendioxid ergibt —, einen Gehalt von etwa 7 Gewichtsprozent an zusätzlich entstandenen $F_1$-Fehlerstellen und 0,9 Gewichtsprozent an zusätzlich entstandenen $F_2$-Fehlerstellen aufweist.

b) Durch Umsetzung von 100 g der gemäß (a) hergestellten modifizierten Azulminsäure mit 0,2 Mol Formaldehyd bei 50° C in wäßriger Lösung wird ein Produkt erhalten, das auch bei einer Lagerung von mehreren Monaten bei 30° C keinen Cyanwasserstoff abspaltet. Im Luftvolumen eines Gefäßes, das zur Hälfte mit dem Verfahrensprodukt gefüllt ist, wird eine Cyanwasserstoff-Konzentration von 0 ppm gemessen.

## Beispiel 23

a) Ein Gemisch aus 108 g der gemäß Beispiel 13a hergestellten modifizierten Azulminsäure und 1000 ml einer 1 n wäßrigen Kalilauge wird 44 Stunden auf 100° C erwärmt. Dabei tritt schon wenige Minuten nach Beginn der Umsetzung eine vollständige Lösung der eingesetzten Azulminsäure ein.

Das Fortschreiten der Verseifungsreaktion wird durch Messung der entbundenen Mengen an Ammoniak und Kohlendioxid kontrolliert. Die freigesetzte Menge an Ammoniak beträgt

nach 8 Stunden 12,2 g
nach 22 Stunden 15 g
nach 44 Stunden 17 g (=1 Mol).

In einem unter genau gleichen Bedingungen durchgeführten Parallelversuch wird durch Ansäuern des Reaktionsgemisches mit 2 Mol wäßriger Salzsäure ermittelt, daß etwa 21,9 g (= 0,5 Mol) Kohlendioxid als Kaliumcarbonat in der Lösung gebunden waren.

Die Aufarbeitung erfolgt dadurch, daß man die braunschwarze wäßrige Reaktionslösung bei 14 Torr einengt, die dabei entstehende braunschwarze Dispersion dreimal mit je 1 Liter Methanol versetzt, jeweils durch Abdestillieren des Methanols sowie des noch vorhandenen Wassers einengt, dann das verbleibende Kristallisat noch einmal mit 800 ml Methanol kurz aufkocht und filtriert. Man erhält 113 g eines wasserlöslichen Produktes von humusartiger Farbe.

Elementaranalyse:
31,5% C; 3,9% H; 26,8% N; 21,0% O; 16,1% K

Aus den gemessenen Mengen an freigesetztem Ammoniak und Kohlendioxid ergibt sich ein molarer $NH_3/CO_2$-Quotient von 2.

Die Differenz aus den ermittelten Ammoniak- und Kohlendioxid-Molzahlen beträgt etwa 0,5. Dieser Faktor besagt, daß etwa die Hälfte aller $F_1$-Fehlerstellen in $F_2$-Fehlerstellen übergegangen sind.

Auf Basis dieser Zahlen errechnet sich, daß 100 Gewichtsteile des Verfahrensproduktes etwa 55 Gewichtsprozent an Kaliumsalz-$F_1$-Fehlerstellen (R=K) und etwa 14,5 Gew.-% an $F_2$-Fehlerstellen enthalten. Bei dieser Methode der Fehlerstellenerzeugung ist demnach auf 2 cyclische Einheiten der Azulminsäure jeweils eine Kaliumsalz-$F_1$-Fehlerstelle entstanden.

Berücksichtigt man sowohl die Polymolekularität des Verfahrensproduktes als auch die Tatsache, daß im »anionischen« und »kationischen« Endgruppenteil der Azulminsäure Sauerstoffatome in Form von Carbonylgruppen (die zur Erhöhung des Sauerstoffgehaltes beitragen) vorliegen, so stehen die gefundenen Werte der Elementaranalyse in relativ guter Übereinstimmung mit Produkten, die mittlere Molekulargewichte zwischen 600 und 800 besitzen. Für eine einheitliche Verbindung der Summenformel $C_{21}H_{28}N_{17}O_9K_3$ (Molekulargewicht=789) berechnet sich vergleichsweise folgende elementare Zusammensetzung:

32,4% C; 3,5% H; 30,5% N; 18,5% O; 15,1% K

Das Verfahrensprodukt, das als Polyelektrolyt bezeichnet werden kann, enthält eine niedermolekulare Fraktion, die besonders gut in Wasser löslich ist.

Elementaranalyse des niedermolekularen Produktes
35,7% C; 2,5% H; 23,5% N; 23,7% O; 14,5% K.

b) Durch Umsetzung des nach der unter (a) beschriebenen Methode hergestellten Azulminsäure-Kaliumsalzes mit Formaldehyd in wäßriger Lösung entsteht ein Azulminsäure-Kaliumsalz-Formaldehyd-Kondensationsprodukt, das gegenüber Cyanwasserstoff-Abspaltung stabil ist.

Beispiele 24a—29a

Nach der im Beispiel 23a beschriebenen Methode werden durch Umsetzung von gemäß Beispiel 13a hergestellter Azulminsäure mit $K_2CO_3$, $KHCO_3$, $Na_2S$, $K_2S$, $Na_2S_2O_3$ bzw. LiOH die jeweiligen Kalium-, Natrium- bzw. Lithium-Salze modifizierter Azulminsäuren in Form humusfarbener Feststoffe erhalten.

Beispiele 30a—47a

Aus dem gemäß Beispiel 23a hergestellten Azulminsäure-Kaliumsalz werden durch Umsetzung in wäßriger Lösung mit $Ca(OH)_2$, $Ba(OH)_2$, $PbCl_4$, $MgCl_2$, $SrCl_2$, $FeSO_4$, $CuSO_4$, $MnSO_4$, $NiCl_2$, $ZnSO_4$, $SnCl_4$, $CdSO_4$, $Bi_2(SO_4)_3$, $Al_2(SO_4)_3$, $AgNO_3$, $HgCl_2$ bzw. $AuCl_3$ die Calcium-, Barium-, Blei-, Magnesium-, Strontium-, Eisen-, Cobalt-, Kupfer-, Mangan-, Nickel-, Zink-, Zinn-, Cadmium-, Wismut-, Aluminium-, Silber-, Quecksilber bzw. Gold-Salze modifizierter Azulminsäuren erhalten.

Beispiele 26b und 29b—47b

Nach der im Beispiel (23b) angegebenen Methode lassen sich aus diesen Azulminsäure-Salzen und Formaldehyd jeweils die entsprechenden Formaldehyd-Kondensationsprodukte der betreffenden Azulminsäure-Salze herstellen.

Beispiel 48

Ein Gemisch aus 108 g (2 Grundmol) der gemäß Beispiel 1 hergestellten Azulminsäure, 4 Mol Glyoxal, 1000 g destilliertem Wasser und 100 g Äthanol wird unter intensivem Rühren 16 Stunden auf 100° C erwärmt. Danach arbeitet man auf, indem man das Festprodukt abfiltriert, wäscht und trocknet. Man erhält 140 g Azulminsäure-Glyoxal-Kondensationsprodukt, das auch bei längerer Lagerung bei Temperaturen zwischen 20 und 40° C keinen Cyanwasserstoff abspaltet.

Aus der während der Umsetzung entbundenen Kohlendioxid-Menge sowie unter Zugrundelegung eines molaren $NH_3/CO_2$-Quotienten von 3,2 ergibt sich, daß das Verfahrensprodukt zwischen 4 und 6 Gewichtsprozent an $F_1$- und $F_2$-Fehlerstellen enthält. Demnach verläuft die obige Kondensationsreaktion unter gleichzeitiger Erzeugung von Fehlerstellen.

Nach der im Beispiel 48 beschriebenen Methode werden durch Umsetzung von je 108 g gemäß Beispiel 1 hergestellter Azulminsäure mit 4 Mol der entsprechenden Aldehyde die in der nachstehenden Tabelle 1 aufgeführten Kondensationsprodukte erhalten.

Tabelle 1

| Beispiel Nr. | Aldehyd | Produkt | Ausbeute (in g) |
|---|---|---|---|
| 49 | Acetaldehyd | Az-Acetaldehyd-kond. | 115 |
| 50 | Propionaldehyd | Az-Propionaldehyd-kond. | 126 |
| 51 | Isobutyraldehyd | Az-Isobutyraldehyd-kond. | 124 |
| 52 | Hydroxypivalinaldehyd | Az-Hydroxypivalinaldehyd-kond. | 125 |
| 53 | Acrolein | Az-Acroleinaldehyd-kond. | 143 |
| 54 | Glucose | Az-Glucose-kond. | 128 |
| 55 | Salicylaldehyd | Az-Salicylaldehyd-kond. | 121 |
| 56 | Furfurol | Az-Furfurol-kond. | 135 |
| 57 | ω-Hydroxymethylfurfurol | Az-ω-Hydroxymethyl-furfurol-kond. | 139 |
| 58 | Chloralhydrat | Az-Chloralhydrat-kond. | 149 |

»Az« steht jeweils für »Azulminsäure«.

## Beispiel 59

Ein Gemisch aus 108 g der gemäß Beispiel (13a) hergestellten Azulminsäure, 0,3 Mol Formaldehyd, 600 g destilliertem Wasser und 100 g feinpulvriger Asche aus Tabakblättern (Zusammensetzung der Asche, berechnet auf Oxide der Elemente: 29,1% $K_2O$; 3,2% $Na_2O$; 36,0% CaO; 7,4% MgO; 1,9% $Fe_2O_3$; 4,7% $P_2O_5$; 3,1% $SO_3$; 5,8% $SiO_2$ und 6,7% $Cl_2$) wird unter intensivem Rühren 6 Stunden auf 100°C erwärmt. Danach arbeitet man auf, indem man das Festprodukt abfiltriert, wäscht und trocknet. Man erhält 195 g Tabakasche enthaltendes Azulminsäure-Formaldehyd-Kondensationsprodukt, das eine ausgezeichnete Stabilität gegenüber einer Blausäureabspaltung aufweist.

Durch Messung der während der Umsetzung entbundenen Mengen an Ammoniak und Kohlendioxid ergibt sich, daß die Kondensationsreaktion unter gleichzeitiger Erzeugung von Fehlerstellen verläuft.

Nach der im Beispiel 59 beschriebenen Methode werden durch Umsetzung von je 108 g gemäß Beispiel (13a) hergestellter Azulminsäure mit 0,3 Mol Formaldehyd in Gegenwart von Zusatzstoffen die in der nachstehenden Tabelle 2 aufgeführten Kondensationsprodukte erhalten.

Tabelle 2

| Beispiel Nr. | Zusatzstoff | Eingesetzte Menge an Zusatzst. (g) | Ausbeute (in g) |
|---|---|---|---|
| 60 | feinpulvrige Asche aus Weidengehölz | 100 | 198 |
| 61 | Ascherückstände von Ginster-, Buchen- und Birkenblättern im Verhältnis 1:1:1 (Trockengewicht) | 100 | 196 |
| 62 | Fichtenholz-Asche | 100 | 199 |
| 63 | normale Gartenerde mit einem Feuchtigkeitsgehalt von etwa 40 Gew.-% | 424 | 377 |

Tabelle 2 (Fortsetzung)

| Beispiel Nr. | Zusatzstoff | Eingesetzte Menge an Zusatzst. (g) | Ausbeute (in g) |
|---|---|---|---|
| 64 | Polymethylenharnstoff der Konstitution 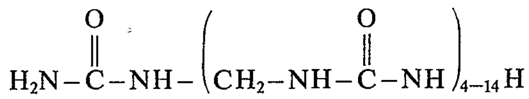 | 100 | 205 |
| 65 | Torf | 100 | 180 |
| 66 | Mischung aus unlöslichem Calziumcyanat und Calziumcyanamid 1:1 | 100 | 185 |
| 67 | pulvriges, schwerlösliches Isobutyraldehyd-Harnstoff-Kondensat (Molverhältnis 1:1) | 100 | 197 |
| 68 | pulvriges, schwerlösliches Isobutyraldehyd-Harnstoff-Kondensat (Molverhältnis 2:1) | 100 | 193 |
| 69 | Isobutyraldehyd-Harnstoff-Kondensat (Molverhältnis 1:2,5) | 100 | 190 |
| 70 | pulvriges, schwerlösliches Crotonaldehyd-Harnstoff-Kondensat (Molverhältnis 1:2) | 100 | 189 |
| 71 | pulvriges, schwerlösliches Crotonaldehyd-Harnstoff-Kondensat (Molverhältnis 1:1) | 100 | 193 |
| 72 | pulvriges, schwerlösliches Crotonaldehyd-Harnstoff-Kondensat, hergestellt aus 1 Mol Crotonaldehyd und 2 Mol Harnstoff, im wesentlichen bestehend aus 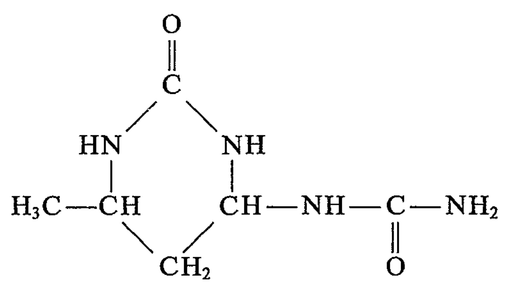 | 100 | 204 |
| 73 | Thomasmehl | 100 | 205 |
| 74 | Phosphorit | 100 | 203 |
| 75 | Rhenaniaphosphat | 100 | 198 |
| 76 | Aktivkohlepulver | 100 | 204 |
| 77 | Tonerdehydrat | 100 | 207 |
| 78 | Siliziumdioxid | 100 | 206 |

Beispiel 79

a) Zu 600 ml 18%iger wäßriger Blausäure und 100 g Polymethylenharnstoff werden unter intensivem Rühren 34 g etwa 25%iger wäßriger Ammoniak-Lösung gegeben, die 6,8 g Natriumcyanat enthält. Nach dem Erwärmen der Mischung auf 40°C steigt die Temperatur durch freiwerdende Polymerisationswärme auf 70°C an. Man erhitzt noch 4 Stunden auf 90°C und arbeitet dann auf, indem man das Polymerisat abfiltriert, nacheinander mit Wasser und Äthanol wäscht und anschließend unter vermindertem Druck trocknet.

Ausbeute: 201 g modifizierter Azulminsäure, die Polymethylenharnstoff enthält.

Stickstoffgehalt des Verfahrensproduktes: 38,9%.

b) Ein Gemisch aus 200 g der gemäß (a) hergestellten Polymethylenharnstoff enthaltenden modifizierten Azulminsäure, 200 ml einer 30%igen wäßrigen Formalin-Lösung (=2 Mol Formaldehyd) und 1200 ml destilliertem Wasser wird 3 Stunden lang auf 100°C erwärmt. Nach dem Aufarbeiten erhält man ein pulvriges Azulminsäure-Polymethylenharnstoff-Formaldehyd-Kondensationsprodukt, das gegen Cyanwasserstoffabspaltung völlig stabil ist. Bei Langzeitlagerungen wird in Luft enthaltenden Gebinden eine Cyanwasserstoff-Konzentration von 0 ppm gemessen. Während der Kondensationsreaktion wurden etwa 1,6 Mol an Formaldehyd aufgenommen.

Nach der im Beispiel (79a) beschriebenen Methode werden auch die in der nachstehenden Tabelle 3 aufgeführten Zusatzstoffe enthaltenden modifizierten Azulminsäuren hergestellt. Es wird jeweils 1 Liter 19,2%ige wäßrige Blausäure in Gegenwart von jeweils 180 g Zusatzstoff polymerisiert.

Tabelle 3

| Beispiel Nr. | Zusatzstoff | Ausbeute (in g) | Stickstoffgehalt des Produktes |
|---|---|---|---|
| 80 a | Aktivkohle | 342 | 22,9% |
| 81 a | Bleicherde | 340 | 22,7% |
| 82 a | Asbestmehl | 354 | 20,1% |
| 83 a | Trilon-B | 170 | 41,8% |
| 84 a | Stärke (unlöslich) | 342 | 22,4% |
| 85 a | Flugasche »M« | 353 | ca 22 % |
| 86 a | Torf (feucht) | 155 | 31,3% |

Beispiele 80b—86b

Nach der im Beispiel (79b) beschriebenen Methode werden die in den Beispielen 80a—86a genannten Stoffe mit wäßriger Formalin-Lösung in die jeweiligen Azulminsäure-Zusatzstoff-Formaldehyd-Kondensationsprodukte überführt.

Beispiel 87

100 g der gemäß Beispiel (13a) hergestellten und durch Kondensation mit wenig Formaldehyd stabilisierten Azulminsäure werden bei Raumtemperatur 10 Minuten lang mit einem Überschuß an wäßriger Salpetersäure gerührt. Danach wird das Festprodukt abfiltriert und mit wenig Wasser gewaschen. Man erhält ein Azulminsäure-Salpetersäure-Addukt, in dem auf 100 Gewichtsteile an stabilisierter Azulminsäure 0,51 Mol Salpetersäure gebunden sind. Im Mittel wird demnach trotz heterogener Reaktion von etwa 4 Aminogruppen, die in etwa 216 Gewichtsteilen der eingesetzten Azulminsäure vorhanden sind, eine Aminogruppe innerhalb des polycyclischen Gerüstes in eine Gruppierung der Konstitution

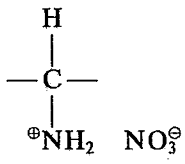

überführt.

Elementaranalyse des isolierten Produktes:
35,2% C; 4,3% H; 38,9% N; 20,9% O

Das Verfahrensprodukt enthält etwa 19,2 Gew.-% Nitrationen.

Da bei der Herstellung derartiger Nitrationen enthaltender Azulminsäuren beim Auswaschen der Produkte mit viel Wasser die Gefahr besteht, daß die enthaltenen Nitrationen zum Teil abdissoziieren, ist es zweckmäßig, lediglich mit wenig Wasser zu waschen und das feuchte Pulver, das noch Anteile an nicht ionisch gebundener Salpetersäure enthält, mit Ammoniak zu begasen. Durch diese Maßnahme wird nicht ionisch gebundene Salpetersäure in Ammoniumnitrat überführt.

## Beispiel 88

100 g des gemäß Beispiel (13a) hergestellten und durch Kondensation mit wenig Formaldehyd stabilisierten Azulminsäure werden bei Raumtemperatur 5 Minuten lang mit einem Überschuß an 2 normaler wäßriger Salpetersäure gerührt. Danach wird das Festprodukt abfiltriert und mit wenig Wasser gewaschen. Man erhält ein Azulminsäure-Salpetersäure-Addukt, in dem auf 100 Gewichtsteile an stabilisierter Azulminsäure 0,64 Mol Salpetersäure gebunden sind. Demnach werden im Mittel auf 4 Aminogruppenäquivalente in 216 Gewichtsteilen an stabilisierter Azulminsäure etwa 1,3 Aminogruppenäquivalente zur Salzbildung mit Salpetersäure herangezogen.

In weiteren Versuchen ergibt sich, daß der aufgenommene Anteil an Salpetersäure um so größer ist, je feinteiliger (z. B. Korngröße <100 µm) die eingesetzte stabilisierte Azulminsäure ist.

Nach der im Beispiel (87) beschriebenen Methode werden auch die in der nachstehenden Tabelle 4 aufgeführten Addukte erhalten, indem man jeweils 100 Gewichtsteile einer mit wenig Formaldehyd stabilisierten Azulminsäure mit einem Überschuß an der jeweiligen Säure umsetzt.

Tabelle 4

| Beispiel Nr. | Addukt aus | Gebundene Säuremenge pro 100 g Azulminsäure |
|---|---|---|
| 89 | Az + Ölsäure | 0,33 Mol |
| 90 | Az + Ricinolsäure | 0,25 Mol |
| 91 | Az + Dibutylphosphorsäure | 0,25 Mol |
| 92 | Az + 2-Äthylcapronsäure | 0,35 Mol |
| 93 | Az + Acrylsäure | 0,38 Mol |
| 94 | Az + Methacrylsäure | 0,4 Mol |
| 95 | Az + Maleinsäure | 0,4 Mol |
| 96 | Az + Maleinsäure-Oleylalkohol-Halbester | 0,34 Mol |

»Az« steht jeweils für »stabilisierte Azulminsäure«.

**Die in den Beispielen 89—96 aufgeführten Verbindungen besitzen hydrophoben Charakter.**

Beispiel 97

100 g von mit Formaldehyd stabilisierter Azulminsäure mit einem $F_1$-Fehlerstellen-Gehalt von etwa 2,6 Gewichtsprozent und einem $F_2$-Fehlerstellen-Gehalt von 0,6 Gewichtsprozent werden mit 0,5 Mol Cadmium-II-chlorid und 600 ml destilliertem Wasser 6 Stunden bei Raumtemperatur gerührt. Danach wird das Festprodukt abfiltriert, gut mit Wasser gewaschen und bei 100° C getrocknet. Man isoliert ein schwarzes feinpulvriges Produkt mit einem Cadmiumgehalt von 8,1 Gewichtsprozent. Es handelt sich bei dem Verfahrensprodukt um mit Formaldehyd stabilisierte Azulminsäure, die Cadmium-II-chlorid komplex gebunden enthält. — Das Azulminsäure-Komplexsalz ist gegenüber Cyanwasserstoffabspaltung völlig stabil.

Nach der im Beispiel 97 beschriebenen Methode werden auch die in der nachstehender Tabelle 5 aufgeführten Komplex-Salze erhalten, indem man jeweils 100 g mit Formaldehyd stabilisierter Azulminsäure mit jeweils 0,5 Mol Chlorid oder Sulfat des entsprechenden Metalls umsetzt.

Tabelle 5

| Beispiel Nr. | Metallsalz | Metallgehalt des Azulminsäure-Kompl. |
|---|---|---|
| 98 | $MnSO_4$ | 3,65 Gew.-% |
| 99 | $SnCl_2$ | 23,5 Gew.-% |
| 100 | $CuSO_4$ | 10,4 Gew.-% |
| 101 | $HgCl_2$ | 28,4 Gew.-% |
| 102 | $CoCl_2$ | 5,2 Gew.-% |
| 103 | $ZnCl_2$ | 10,4 Gew.-% |
| 104 | $FeSO_4$ | 6,8 Gew.-% |
| 105 | $PbCl_2$ | 25,8 Gew.-% |
| 106 | $Bi(NO_3)_3$ | 21 Gew.-% |
| 107 | $AgNO_3$ | 26,7 Gew.-% |

Beispiel 108

a) Ein Gemisch aus 108 g nahezu fehlerstellenfreier Azulminsäure, 1 Mol des gemäß Beispiel 97 hergestellten Azulminsäure-Cadmiumchlorid-Komplexes und 1000 g destilliertem Wasser wird 8 Stunden bei 70° C gerührt. Anschließend wird das Festprodukt abfiltriert, gewaschen und getrocknet. Man erhält einen Azulminsäure-Cadmiumchlorid-Komplex mit einem relativ hohen $F_1$- und $F_2$-Fehlerstellengehalt. Der Gehalt an $F_1$-Fehlerstellen beträgt etwa 10—12 Gewichtsprozent.

b) 120 g des nach der unter (a) beschriebenen Methode hergestellten fehlerstellenhaltigen Azulminsäure-Cadmiumchlorid-Komplexes werden in wäßrigem Medium 6 Stunden lang bei 50° C mit 1 Mol Formaldehyd behandelt. Danach wird das Festprodukt abfiltriert, gewaschen und getrocknet. Man erhält einen durch Formaldehyd stabilisierten Azulminsäure-Cadmiumchlorid-Komplex, der selbst bei 180° C keinen Cyanwasserstoff abspaltet. Das Produkt weist einen Cadmium-Gehalt von 17,3 Gewichtsprozent auf.

c) 120 g des gemäß (b) hergestellten Produktes werden 2 Stunden lang bei 25° C mit einem Überschuß an 1 n wäßriger Natronlauge gerührt. Danach wird das Festprodukt abfiltriert, gewaschen und getrocknet. Man erhält einen durch Formaldehyd stabilisierten Azulminsäure-Cadmiumhydroxid-Komplex.

In der im Beispiel 108 unter (a) angegebenen Weise werden die in der nachstehenden Tabelle 6 aufgeführten fehlerstellenhaltigen Azulminsäure-Komplexe erhalten, indem man relativ fehlerstellenfreie Azulminsäure mit dem entsprechenden Azulminsäure-Metallsalz-Komplex umsetzt.

Tabelle 6

| Beispiel Nr. | Azulminsäure-Metallsalz-Komplex | Gehalt an $F_1$-Fehlerstellen (%) |
|---|---|---|
| 109 a | Az-$MnSO_4$-Komplex | 9 |
| 110 a | Az-Sn-$Cl_2$-Komplex | 12 |
| 111 a | Az-$CuSo_4$-Komplex | 8 |
| 112 a | Az-$HgCl_2$-Komplex | 7 |
| 113 a | Az-$CoCl_2$-Komplex | 10,5 |
| 114 a | Az-$ZnCl_2$-Komplex | 13 |
| 115 a | Az-$FeSo_4$-Komplex | 8 |
| 116 a | Az-$PbCl_2$-Komplex | 9 |
| 117 a | Az-$Bi(NO_3)_3$-Komplex | 8 |
| 118 a | Az-$AgNO_3$-Komplex | 7 |

»Az« steht jeweils für »Azulminsäure«.

Nach der im Beispiel 108 unter (b) angegebenen Methode werden die in der Tabelle 6 aufgeführten Azulminsäure-Metallsalz-Komplexe mit Formaldehyd kondensiert. Man erhält dabei die in der nachstehenden Tabelle 7 aufgeführten, mit Formaldehyd stabilisierten Azulminsäure-Metallsalz-Komplexe.

Tabelle 7

| Beispiel Nr. | Formaldehyd-Kondensationsprodukt aus: | Metallgehalt |
|---|---|---|
| 109 b | Az-$MnSO_4$-Komplex gemäß Beispiel 109 a | 3,2% Mn |
| 110 b | Az-$SnCl_2$-Komplex gemäß Beispiel 110 a | 18% Sn |
| 111 b | Az-$CnSO_4$-Komplex gemäß Beispiel 111 a | 9,6% Cu |
| 112 b | Az-$HgCl_2$-Komplex gemäß Beispiel 112 a | 26% Hg |
| 113 b | Az-$CoCl_2$-Komplex gemäß Beispiel 113 a | 5,3% Co |
| 114 b | Az-$ZnCl_2$-Komplex gemäß Beispiel 114 a | 9,5% Zn |
| 115 b | Az-$FeSO_4$-Komplex gemäß Beispiel 115 a | 7,2% Fe |
| 116 b | Az-$PbCl_2$-Komplex gemäß Beispiel 116 a | 23,8% Pb |

»Az« steht jeweils für »Azulminsäure«

Bei Verwendung von Silber-, Gold- oder Platinsalz-Komplexen der Azulminsäure lassen sich mit Formaldehyd stabilisierte Produkte mit einem Metallgehalt von über 29 Gewichtsprozent darstellen.

Beispiel 119

Ein Gemisch aus 100 g nahezu fehlerstellenfreier Azulminsäure, 17 g Kupfernitrat-Trihydrat, 300 g Ameisensäure und 80 g Wasser wird unter Durchleiten von 25 Litern Luft pro Stunde 6 Stunden lang bei 60—70° C gerührt. Danach wird das Festprodukt abfiltriert, gewaschen und getrocknet. Man erhält einen Azulminsäure-Kupfernitrat-Komplex mit einem Gehalt von etwa 8,9 Gewichtsprozent an $F_1$-Fehlerstellen und einem Gehalt von etwa 2,3 Gewichtsprozent an $F_2$-Fehlerstellen. Ferner isoliert man 0,8 Gewichtsprozent an Oxamid, das aus abgespaltener monomerer Blausäure im Verlaufe der oxydativen Fehlerstellenerzeugung und gleichzeitiger Komplexierung entstanden ist.

Das Produkt läßt sich durch Umsetzung mit Formaldehyd stabilisieren.

Beispiel 120

a) Ein Gemisch aus 108 g gemäß Beispiel 13a hergestellter Azulminsäure, 1 Mol Eisen-II-sulfat und 800 ml destilliertem Wasser wird 10 Stunden lang bei 100° C gerührt. Danach wird das Festprodukt abfiltriert, mit 5%iger wäßriger Ammoniak-Lösung gewaschen und getrocknet. Man erhält eine relativ fehlerstellenreiche (bis zu 20 Gewichtsprozent) Azulminsäure der Zusammensetzung:

30,3% C; 3,6% H; 28,7% N; 26,8% O; 11,5% Fe

120 g des gemäß (a) hergestellten fehlerstellenreichen Azulminsäure-Eisen-Komplexes werden in wäßrigem Medium bei 50° C 5 Stunden lang mit 120 g 30%iger Formaldehyd-Lösung behandelt. Man erhält einen durch Kondensation mit Formaldehyd stabilisierten Azulminsäure-Eisen-Komplex, der selbst bei 180° C keinen Cyanwasserstoff abspaltet.

Nach der im Beispiel (120a) angegebenen Methode werden auch die in der nachfolgenden Tabelle 8 aufgeführten Azulminsäure-Metallsalz-Komplexe hergestellt.

Tabelle 8

| Beispiel Nr. | Verwendete Metallverbindung | Zusammensetzung des Produktes |
|---|---|---|
| 121 a | $CuSO_4$ | 24,5% C; 2,2% H; 22,6% N; 23,8% O; 3,3% S; 23,9% Cu |
| 122 a | $FeCl_3$ | 35,7% C; 3,1% H; 33,3% N; 22,3% O; 1,7% Cl; 4,4% Fe |
| 123 a | $ZnCl_2$ | 23,5% C; 2,2% H; 21,6% N; 19,1% O; 34,1% Zn |
| 124 a | $CoCl_2$ | 28,4% C; 2,7% H; 27,8% N; 20,4% O; 20,2% Co |
| 125 a | $Cu(OCOCH_3)_2$ | 22,3% C; 2,6% H; 22,6% N; 18,4% O; 33,9% Cu |
| 126 a | $SnCl_2$ | 14,7% C; 2,3% H; 12,9% N; 24,8% N; 44,3% Sn |
| 127 a | $MnSO_4$ | 28,4% C; 3,1% H; 26,6% N; 24,2% O; 17,6% Mn |
| 128 a | $SnCl_2$ (0,4 Mol) | 23,4% C; 2,7% H; 21,0% N; 21,9% O; 25,9% Sn |
| 129 a | $ZnCl_2$ (0,5 Mol) | 29,2%; 2,6% H; 29,5% N; 19,1% O; 19,8% Zn |
| 130 a | $PbCl_2$ | 58,3% Pb |
| 131 a | $Bi(NO_3)_3$ | 59,1% Bi |
| 132 a | $Tl_2SO_4$ | 57,9% Tl |
| 133 a | $TiCl_4$ (Xylol) | 25,2% Ti |
| 134 a | $Zr(SO_4)_2$ | 38,9% Zr |
| 135 a | $H_2WO_4$ | 55,8% W |
| 136 a | $NiCl_2$ | 29,2% Ni |
| 137 a | $AgNO_3$ | 43,1% Ag |
| 138 a | $HgCl_2$ | 58,3% Hg |
| 139 a | $HAuCl_4$ | 56% Au |
| 140 a | $H_2PtCl_6$ | 55,5% Pt |

**Beispiele 121b—140b**

**Nach der im Beispiel (120b) angegebenen Methode werden die in der Tabelle 8 aufgeführten Azulminsäure-Metallsalz-Komplexe mit Formaldehyd in die jeweiligen Azulminsäure-Metallsalz-Komplex-Kondensationsprodukte überführt.**

**Die in den Beispielen (121b)—(140b) aufgeführten Produkte spalten selbst bei 180°C keinen Cyanwasserstoff ab.**

Beispiel 141

a) Ein Gemisch aus 100 g nahezu fehlerstellenfreier Azulminsäure, 100 g Gelatine, 100 g Cellulosepulver, 0,8 Mol Phosphorsäure und 1200 ml Wasser wird 2 Stunden lang bei 60° C gerührt. Danach wird das Festprodukt abfiltriert, gewaschen und getrocknet. Man isoliert ein relativ fehlerstellenreiches, phosphorsäurehaltiges Mischprodukt aus Azulminsäure sowie Cellulosepulver und Gelatine und deren Abbauprodukten.

120 g des gemäß (a) hergestellten Produktes werden in 300 g Wasser 5 Stunden lang bei 50° C mit 1 Mol Formaldehyd behandelt. Danach wird das Festprodukt abfiltriert, gewaschen und getrocknet. Man isoliert ein durch Kondensation mit Formaldehyd stabilisiertes, phosphorsäurehaltiges Mischprodukt aus Azulminsäure, Cellulosepulver und Gelatine sowie den Abbauprodukten dieser Naturstoffe.

Beispiel 142

Ein Gemisch aus 108 g Azulminsäure mit einem $F_1$-Fehlerstellengehalt von etwa 2,5 Gew.-%, einem $F_2$-Fehlerstellengehalt von etwa 0,5 Gew.-% und einer Aminogruppen-Gesamtkonzentration von etwa 19 Gew.-% (= 1,12 $NH_2$-Äquivalente pro 100 g Azulminsäure) und 0,2 Äquivalenten Formaldehyd (= 6 g in 20 Gewichtsteilen Wasser) sowie 500 g destilliertem Wasser wird 4 Stunden bei 100° C gerührt. Das Verfahrensprodukt wird abfiltriert, mit Wasser gewaschen und anschließend eine Stunde lang mit 300 g einer 0,2%igen wäßrigen Ammoniak-Lösung bei Raumtemperatur gerührt, wobei noch enthaltene Spuren an Formaldehyd in wasserlösliches Hexamethylentetramin überführt werden. Das durch Filtration isolierte und nochmals mit Wasser gewaschene Produkt (partiell mit Formaldehyd kondensierte Azulminsäure) wird danach mit 140 g mikrobiell aktiver Gartenerde (Feuchtigkeitsgehalt 40 Gew.-%) in 500 g Wasser unter Überleiten von etwa 50 ml Luft pro Minute 30 Stunden lang bei 35° C gut gerührt. Beim Aufarbeiten erhält man ein ammoniakhaltiges Mischprodukt aus partiell stabilisierter Azulminsäure und mikrobiell aktiver Gartenerde. Im Filtrat des Reaktionsproduktes läßt sich kein Cyanwasserstoff nachweisen.

Während des 30stündigen Rührens der partiell stabilisierten Azulminsäure mit mikrobiell aktiver Gartenerde werden insgesamt 5,56 g Ammoniak entbunden. Von dieser Menge wird der in einem Parallelversuch ermittelte Kohlendioxid-Gehalt von 90 Litern Luft und die durch mikrobielle Aktivität der 140 g Gartenerde erzeugte Kohlendioxidmenge (Summe = 2,5 g Kohlendioxid) abgezogen. Somit errechnet sich, daß 3,06 g (0,07 Mol) Kohlendioxid durch Decarboxylierung von $F_1$-Fehlerstellen — d. h. neu erzeugten $F_1$-Fehlerstellen der Azulminsäure — entstanden sind. Auf 100 g eingesetzter partiell stabilisierter Azulminsäure haben sich demnach im Verlaufe des Rührens in Gegenwart der mikrobiell aktiven Gartenerde etwa 2 Gewichtsprozent an $F_2$-Fehlerstellen gebildet. Dabei ist der bei der primären Entstehung der $F_1$-Fehlerstellen erzeugte Ammoniak im Verfahrensprodukt verblieben.

Beispiel 143

Ein Gemisch aus 108 g (2 Grundmol) der gemäß Beispiel 1 hergestellten schwarzen, unstabilisierten Azulminsäure, 500 g destilliertem Wasser und 20 g einer 30%igen wäßrigen Formalin-Lösung (= 0,2 Mol Formaldehyd) wird 4 Stunden lang bei 100° C gerührt. Danach wird das Festprodukt abfiltriert, gewaschen und getrocknet.

Ausbeute: 11 g an Azulminsäure-Kondensationsprodukt, das gegenüber Cyanwasserstoffabspaltung relativ beständig ist. Im Luftraum von Gefäßen, die zur Hälfte mit den Verfahrensprodukten gefüllt sind, wird nach zehntägiger Lagerung bei 50° C eine Cyanwasserstoffkonzentration von 0 ppm gemessen.

Das während der vierstündigen Kondensationsreaktion durch $F_2$-Fehlerstellenerzeugung entstandene Kohlendioxid wird titrimetrisch bestimmt. Es werden insgesamt 0,88 g (0,02 Mol) an Kohlendioxid entbunden, was einem $F_2$-Fehlerstellengehalt von 0,53 Gewichtsprozent entspricht.

In einem unter genau gleichen Bedingungen durchgeführten Parallelversuch wird die nach dem Abfiltrieren des Verfahrensproduktes verbleibende Mutterlauge eingeengt. Aus dem dabei anfallenden gelblich-braunen Rückstand wird das Hexamethylentetramin, das durch Reaktion des bei der $F_1$-Fehlerstellenerzeugung gebildeten Ammoniaks mit Formaldehyd entstanden ist, durch Extraktion mit Chloroform isoliert.

Ausbeute: 2,8 g Hexamethylentetramin

Da 140 g Hexamethylentetramin 68 g Ammoniak in gebundener Form enthalten, errechnet sich aus der angegebenen Ausbeute an Hexamethylentetramin, daß im Verlauf der Kondensationsreaktion etwa 0,08 Mol an Ammoniak entstanden sind. Ferner ergibt sich aus der Differenz der Molmengen an Ammoniak und Kohlendioxid, daß 0,06 Mol $F_1$-Fehlerstellen nicht in $F_2$-Fehlerstellen umgewandelt

worden sind. Der Gehalt an $F_1$-Fehlerstellen im Verfahrensprodukt beträgt demnach etwa 4 Gewichtsprozent.

Gesamtmenge an Fehlerstellen ($F_1$ und $F_2$): 4,53 Gewichtsprozent.

Hieraus folgt, daß während der Kondensationsreaktion gleichzeitig Fehlerstellen erzeugt wurden.

### Beispiel 144

a) In 1800 g destilliertes Wasser werden folgende Stoffe eingerührt:

108 g der gemäß Beispiel 13a hergestellten modifizierten Azulminsäure,
10 g normaler Torf,
5 g eines handelsüblichen gekalkten Torfes,
5 g Kaliumnitrat,
10 g Calciumcyanamid,
5 g Calciumnitrat,
20 g einer Calciumsulfitablauge, die etwa 40% an Ligninsulfonaten bzw. Ligninkohlehydratverbindungen enthält,
15 g Calciumdihydrogenphosphat,
5 g Torf, die durch Verarbeitung von Torf mit Abfallprodukten tierischer und pflanzlicher Herkunft hergestellt wurden,
10 g Leunasalpeter (Ammoniumsulfat · 2 Ammoniumnitrat),
5 g Kalkammonsalpeter (Ammoniumnitrat + Calciumcarbonat),
5 g eines Torfkalkdüngemittels, das aus kohlensaurem Kalk, Magnesiumcarbonat und etwa 20 Gew.-% Torf besteht,
5 g einer 10%igen kalialkalischen Lösung von Huminsäuren,
50 g eines schwerlöslichen Kondensationsproduktes aus 1 Mol Harnstoff und 1 Mol Isobutyraldehyd,
30 g eines Polymethylenharnstoffes der Konstitution

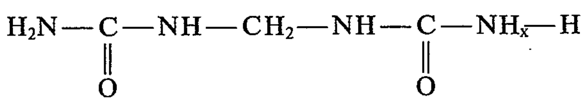

$x = 4 - 12$,

sowie

0,5 g Eisen-II-sulfat, 0,2 g Kupfersulfat, 0,2 g Mangan-II-sulfat und 0,1 g Zinksulfat. Die gut gerührte Dispersion wird auf 80° C aufgeheizt und 4 Stunden bei dieser Temperatur gehalten.

b) In einem Parallelversuch werden 100 g der gemäß Beispiel 13a hergestellten modifizierten Azulminsäure unter den unter (a) genannten Bedingungen mit den aufgezählten Spurenelement-Salzen in den angegebenen Mengen, jedoch ohne weitere Zusatzstoffe behandelt. Aus der dabei ermittelten Ammoniak/Kohlendioxid-Bilanz wird festgestellt, daß etwa 0,2 Mol an Ammoniak und etwa 0,05 Mol an Kohlendioxid entbunden werden. Daraus ergibt sich ein molarer $NH_3/CO_2$-Quotient von 4. Die Differenz der Molmengen an Ammoniak und Kohlendioxid ($0{,}1 - 0{,}05 = 0{,}15$) zeigt, daß 0,15 Äquivalente an $F_1$-Fehlerstellen und etwa 0,05 Äquivalente an $F_2$-Fehlerstellen erzeugt wurden. Es sind demnach etwa 10,2 Gew.-% an $F_1$-Fehlerstellen und etwa 1,45 Gew.-% an $F_2$-Fehlerstellen entstanden. Gesamtfehlerstellengehalt ($F_1 + F_2$) : 11,65 Gew.-%.

Aufgrund der Ergebnisse dieses Vergleichsversuches kann angenommen werden, daß in dem gemäß (a) hergestellten Verfahrensprodukt eine analoge Fehlerstellenkonzentration vorhanden ist.

c) im Anschluß an die unter (a) beschriebene Fehlerstellenerzeugung wird die gut gerührte Mischung 3 Stunden lang bei 30° C mit 300 g einer 30%igen wäßrigen Formalin-Lösung behandelt. Danach entfernt man das Wasser und nicht umgesetzten Formaldehyd, indem man das Reaktionsgemisch bei 14 Torr bis zur breiigen Konsistenz einengt. Der noch wasserhaltige Brei wird in eine Pfanne gegossen und im Vakuumtrockenschrank bei 60° C getrocknet. Man erhält 333 g einer krümeligen, schwarz-braunen Substanz, die neben den Spurenelementen Eisen, Kupfer, Mangan und Zink auch Kalium, Stickstoff und Phosphor sowie etwa 15 Gewichtsprozent an Wasser enthält. Die Nährstoffionen sind dabei in einer für Pflanzen verfügbaren Form vorhanden.

Im Luftraum von Gefäßen, die zur Hälfte mit den Verfahrensprodukten gefüllt sind, wird nach 50stündigem Erhitzen auf 50° C eine Cyanwasserstoffkonzentration von 0 ppm gemessen.

**Patentansprüche**

1. Agrochemische Mittel auf Basis von stabilisierten Azulminsäuren, dadurch gekennzeichnet, daß sie neben Streckmitteln und/oder oberflächenaktiven Stoffen als Wirkstoffe mindestens eine gegebenenfalls Zusatzstoffe enthaltende stabilisierte Azulminsäure enthalten,
die erhältlich ist durch Kondensation von Carbonylverbindungen mit Azulminsäuren mit einem Gehalt von 0,5 bis 55 Gewichtsprozent an ionischen Gruppen der Formel

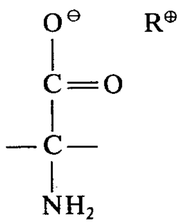

($F_1$)

in welcher

R für Wasserstoff, Ammonium, ein Äquivalent einer protonisierten oder quaternierten organischen Stickstoffbase, eines Sulfonium-Kations oder für ein Äquivalent eines Metallkations steht,

und mit einem Gehalt von von 0,5 bis 15 Gewichtsprozent an durch Decarboxylierungsreaktionen entstandenen Gruppen der Formel

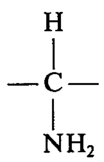

($F_2$)

bzw. Säureadditions-Salze und/oder Komplexverbindungen dieser stabilisierten Azulminsäuren enthalten.

2. Düngemittel, gekennzeichnet durch einen Gehalt an mindestens einer stabilisierten Azulminsäure der im Anspruch 1 genannten Art.

3. Verwendung von stabilisierten Azulminsäuren der im Anspruch 1 genannten Art als Agrochemikalien.

4. Verwendung von stabilisierten Azulminsäuren der im Anspruch 1 genannten Art als Düngemittel.

5. Verwendung von stabilisierten Azulminsäuren der im Anspruch 1 genannten Art als Bodenverbesserungsmittel.

6. Verfahren zur Herstellung von Düngemitteln, dadurch gekennzeichnet, daß man stabilisierte Azulminsäuren der im Anspruch 1 genannten Art mit Streckmitteln und/oder oberflächenaktiven Mitteln vermischt.

**Claims**

1. Agrochemical agents based on stabilised azulmic acids, characterised in that they contain, in addition to extenders and/or surface-active substances, at least one stabilised azulmic acid as active compounds, which azulmic acid optionally contains additives and is obtainable by the condensation of carbonyl compounds with azulmic acids containing from 0.5 to 55 percent by weight of ionic groups of the formula

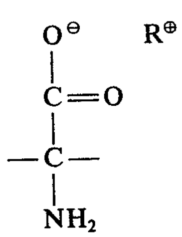

($F_1$)

in which

R represents hydrogen, ammonium, one equivalent of a protonated or quaternised organic nitrogen base or of a sulphonium cation or one equivalent of a metall cation,

and containing from 0.5 to 15 percent by weight of groups formed by decarboxylation reactions, of the formula

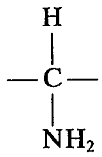

($F_2$)

or contain acid addition salts and/or complex compounds of these stabilised azulmic acids.

2. Fertilisers, characterised in that they contain at least one stabilised azulmic acid of the kind indicated in Claim 1.

3. Use of stabilised azulmic acids of the kind indicated in Claim 1 as agrochemicals.

4. Use of stabilised azulmic acids of the kind indicated in Claim 1 as fertilisers.

5. Use of stabilised azulmic acids of the kind indicated in Claim 1 as soil-improving agents.

6. Process for the preparation of fertilisers, characterised in that stabilised azulmic acids of the kind indicated in Claims 1 are mixed with extenders and/or surface-active agents.

**Revendications**

1. Compositions agrochimiques à base d'acides azulmiques stabilisès, caractérisées en ce qu'elles contiennent, à côté de diluants et/ou d'agents tensio-actifs, comme substances actives, au moins un acide azulmique stabilisé contenant éventuellement des additifs,
qui est obtenu par condensation de composés carbonyliques avec des acides azulmiques ayant une teneur de 0,5 à 55% en poids en groupes ioniques de formule:

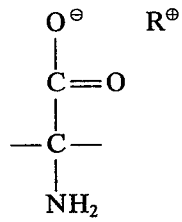

($F_1$)

dans laquelle:

R est l'hydrogène, l'ion ammonium, un équivalent d'une base azotée organique protonisée ou quaternisée, d'un cation sulfonium ou un équivalent d'un cation métallique,

et une teneur de 0,5 à 15% en poids en groupes obtenus par des réactions de décarboxylation, de formule:

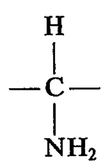

($F_2$)

ou des sels d'addition d'acides et/ou des composés complexes de ces acides azulmiques stabilisés.

2. Engrais, caractérisés par une teneur en au moins un acide azulmique stabilisé du type mentionné dans la revendication 1.

3. Utilisation d'acides azulmiques stabilisés du type mentionné dans la revendication 1 comme agents agrochimiques.

4. Utilisation d'acides azulmiques stabilisés du type mentionné dans la revendication 1 comme engrais.

5. Utilisation d'acides azulmiques stabilisés du type mentionné dans la revendication 1 comme agents d'amendement du sol.

6. Procédé de production d'engrais, caractérisé en ce qu'on mélange des acides azulmiques stabilisés du type indiqué dans la revendication 1 avec des diluants et/ou des agents tensio-actifs.